# EUROPEAN PATENT APPLICATION

(11) **EP 4 808 178 A1**
(43) Date of publication of application: **16.09.2026**
(21) Application number: 23958250.5
(22) Date of filing: 08.11.2023
(51) Int. Cl.: H04W 12/08

(54) **TERMINAL, NETWORK NODE, AND COMMUNICATION METHOD**

(71) Applicant: NTT DOCOMO, INC., Tokyo 100-6150 (JP); NTT, Inc., Tokyo 100-8116 (JP)
(72) Inventor: YAMAUCHI, Kenta, Tokyo 100-6150 (JP); KUROIWA, Fumito, Tokyo 100-6150 (JP); MAEDA, Hiroaki, Musashino-shi, Tokyo 180-8585 (JP); HIGO, Naoki, Musashino-shi, Tokyo 180-8585 (JP); MATSUMOTO, Arifumi, Musashino-shi, Tokyo 180-8585 (JP)
(74) Representative: Hoffmann Eitle
(86) International application number: PCT/JP2023/040183
(87) International publication number: WO 2025/099846

(57) **Abstract**

A terminal includes: a transmission unit configured to transmit a connection request message to a network; a reception unit configured to receive, from the network, a message requesting a credential storing personal data; and a control unit configured to, after the credential has been transmitted by the transmission unit and an authentication process using the credential has been performed in the network, execute a registration procedure to the network after the authentication process.

## Description

### Technical Field

The present invention relates to a terminal, a network node, and a communication method in a communication system.

### Background Art

In 3GPP (registered trademark) (3rd Generation Partnership Project), a radio communication scheme called 5G or NR (New Radio) (hereinafter, this radio communication scheme is referred to as "5G" or "NR") has been introduced in order to achieve a further increase in system capacity, a further increase in data transmission speed, a further reduction in latency in a radio section, and the like. In 5G, various radio technologies have been introduced in order to satisfy the requirement of achieving a throughput of 10 Gbps or more while reducing the latency in the radio section to 1 ms or less. Furthermore, studies are also being conducted on 6G, which is a future communication system.

In recent years, as a new concept of identity management, the concept of self-sovereign identity (SSI) and technologies for implementing the same (W3C Decentralized Identifiers (DIDs), W3C Verifiable Credentials (VCs), and the like) have been studied, in which a user manages his or her own identifier and identity by himself or herself and controls where they are provided, without relying on a centralized identity provider (ID provider) or the like.

In the world of SSI, for example, by presenting, to a service provider side, an attribute/qualification credential that proves attribute information, qualification information, and the like, a user can enable the service provider side to determine whether to provide a service to the user or the like.

### Citation List

### Non-Patent Literature

[Non-Patent Literature 1] 3GPP TS 23.502 V18.3.0 (2023-09)
[Non-Patent Literature 2] W3C Decentralized Identifiers (DIDs) v1.0, https://www.w3.org/TR/did-core/
[Non-Patent Literature 3] W3C Verifiable Credentials Data Model v1.1, https://www.w3.org/TR/vc-data-model/

### Summary of Invention

### Technical Problem

In a conventional carrier NW (network), authentication for connecting a terminal (which may also be referred to as a UE) to the NW is performed based on a SUPI included in a SIM mounted in the terminal.

However, in the conventional NW, there is no mechanism for realizing NW connection of a terminal based on authentication that is based on an attribute/qualification credential.

The present invention has been made in view of the above circumstances, and an object of the present invention is to provide a technique that enables a terminal to connect to a NW based on authentication that is based on an attribute/qualification credential. Solution to Problem

According to the disclosed technique, there is provided a terminal including:
a transmission unit configured to transmit a connection request message to a network;
a reception unit configured to receive, from the network, a message requesting a credential storing personal data; and
a control unit configured to, after the credential is transmitted by the transmission unit and an authentication process using the credential is performed in the network, execute a registration procedure for registering with the network after the authentication process.

### Advantageous Effects of Invention

According to the disclosed technique, a technique is provided that enables a terminal to connect to a NW based on authentication that is based on an attribute/qualification credential.

### Brief Description of Drawings

[FIG. 1] FIG. 1 is a diagram for explaining an example of a communication system.
[FIG. 2] FIG. 2 is a diagram for explaining an example of a communication system in a roaming environment.
[FIG. 3] FIG. 3 is a diagram illustrating an example of a system configuration common to first to third embodiments.
[FIG. 4] FIG. 4 is a diagram illustrating processing sequence example 1 in the first embodiment.
[FIG. 5] FIG. 5 is a diagram for explaining authentication processing of S106 in processing sequence example 1 in the first embodiment.
[FIG. 6] FIG. 6 is a diagram illustrating processing sequence example 2 in the first embodiment.
[FIG. 7] FIG. 7 is a diagram for explaining authentication processing of S107 in processing sequence example 2 in the first embodiment.
[FIG. 8] FIG. 8 is a diagram illustrating processing sequence example 1 in the second embodiment.
[FIG. 9] FIG. 9 is a diagram for explaining authentication processing of S213 in processing sequence example 1 in the second embodiment.
[FIG. 10] FIG. 10 is a diagram illustrating processing sequence example 2 in the second embodiment.
[FIG. 11] FIG. 11 is a diagram for explaining authentication processing of S214 in processing sequence example 2 in the second embodiment.
[FIG. 12] FIG. 12 is a diagram illustrating processing sequence example 1-1 in the third embodiment.
[FIG. 13] FIG. 13 is a diagram for explaining authentication processing of S308 in processing sequence example 1-1 in the third embodiment.
[FIG. 14] FIG. 14 is a diagram illustrating processing sequence example 1-2 in the third embodiment.
[FIG. 15] FIG. 15 is a diagram illustrating existing 3GPP Key hierarchy generation processing.
[FIG. 16] FIG. 16 is a diagram illustrating processing sequence example 2-1 in the third embodiment.
[FIG. 17] FIG. 17 is a diagram for explaining authentication processing of S309 in processing sequence example 2-1 in the third embodiment.
[FIG. 18] FIG. 18 is a diagram illustrating processing sequence example 2-2 in the third embodiment.
[FIG. 19] FIG. 19 is a diagram illustrating one example of a functional configuration of a network node 100 according to an embodiment of the present invention.
[FIG. 20] FIG. 20 is a diagram illustrating one example of a functional configuration of a terminal 20 according to an embodiment of the present invention.
[FIG. 21] FIG. 21 is a diagram illustrating one example of a hardware configuration of the terminal 20 and the network node 100 according to an embodiment of the present invention.
[FIG. 22] FIG. 22 is a diagram illustrating one example of a configuration of a vehicle 2001 according to an embodiment of the present invention. Description of Embodiments

Embodiments of the present invention will now be described below with reference to the drawings. Note that the embodiments described below are merely examples, and embodiments to which the present invention is applied are not limited to the embodiments described below.

In the operation of the radio communication system according to the embodiments of the present invention, existing techniques are used as appropriate. However, such existing techniques are, for example, existing LTE or existing NR, but are not limited thereto.

First, in the present embodiment, an example of a configuration of a 5G core network, which is an example of a network in which authentication based on an attribute/qualification credential is performed, will be described, and then the configuration and operation according to the present embodiment will be described.

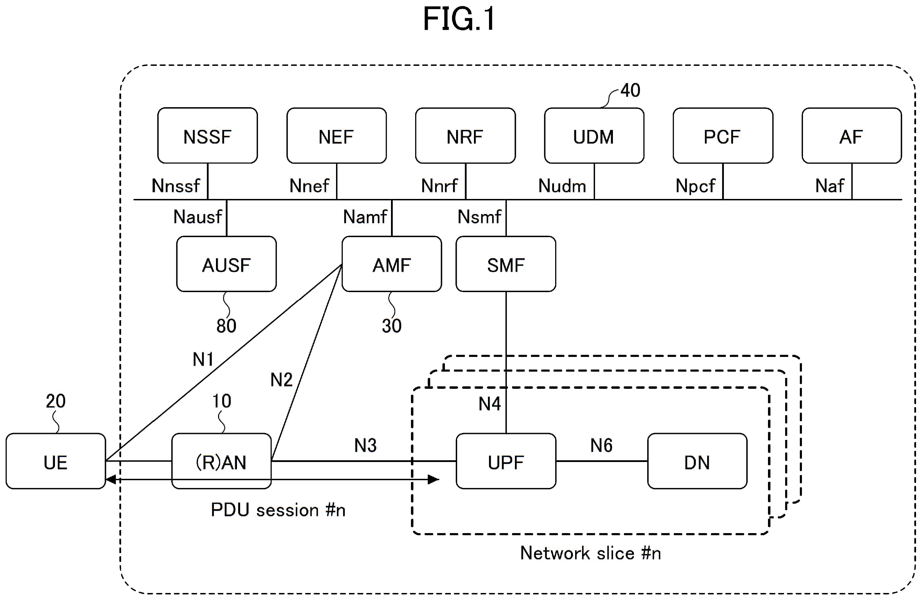

FIG. 1 is a diagram for explaining an example of a communication system corresponding to a core network. As illustrated in FIG. 1, the present communication system includes a UE, which is a terminal 20, and a plurality of network nodes. Hereinafter, one network node is assumed to correspond to each function; however, one network node may implement a plurality of functions, or a plurality of network nodes may implement one function. In addition, "connection" described below may be a logical connection or a physical connection.

A (R)AN ((Radio) Access Network) is a network node 30 having a radio access function, may include a base station 10, and is connected to the UE 20, an AMF (Access and Mobility Management Function) 30, and a UPF (User Plane Function). The AMF 30 is a network node having functions such as termination of a RAN interface, termination of NAS (Non-Access Stratum), registration management, connection management, reachability management, and mobility management. The UPF is a network node having functions such as a PDU (Protocol Data Unit) session point toward the outside that interconnects with a DN (Data Network), packet routing and forwarding, and QoS (Quality of Service) handling of the user plane. The UPF and the DN constitute a network slice.

The AMF 30 is connected to the UE 20, the (R)AN 10, an SMF (Session Management Function), an NSSF (Network Slice Selection Function), an NEF (Network Exposure Function), an NRF (Network Repository Function), a UDM (Unified Data Management), an AUSF (Authentication Server Function), a PCF (Policy Control Function), and an AF (Application Function). The AMF 30, the SMF, the NSSF, the NEF, the NRF, the UDM 40, the AUSF 80, the PCF, and the AF are network nodes interconnected through service-based interfaces Namf, Nsmf, Nnssf, Nnef, Nnrf, Nudm, Nausf, Npcf, and Naf, respectively.

The SMF is a network node having functions such as session management, assignment and management of an IP (Internet Protocol) address of the UE, a DHCP (Dynamic Host Configuration Protocol) function, an ARP (Address Resolution Protocol) proxy, and a roaming function. The NEF is a network node 30 having a function of notifying capabilities and events to other NFs (Network Functions). The NSSF is a network node having functions such as selection of a network slice to which the UE 20 connects, determination of allowed NSSAI (Network Slice Selection Assistance Information), determination of configured NSSAI, and determination of an AMF set to which the UE 20 connects. The PCF is a network node having a function of performing policy control of the network. The AF is a network node having a function of controlling an application server. The NRF is a network node having a function of discovering NF instances that provide services. The UDM 40 is a network node that manages subscriber data and authentication data. The UDM 40 is connected to a UDR (User Data Repository) that stores the data.

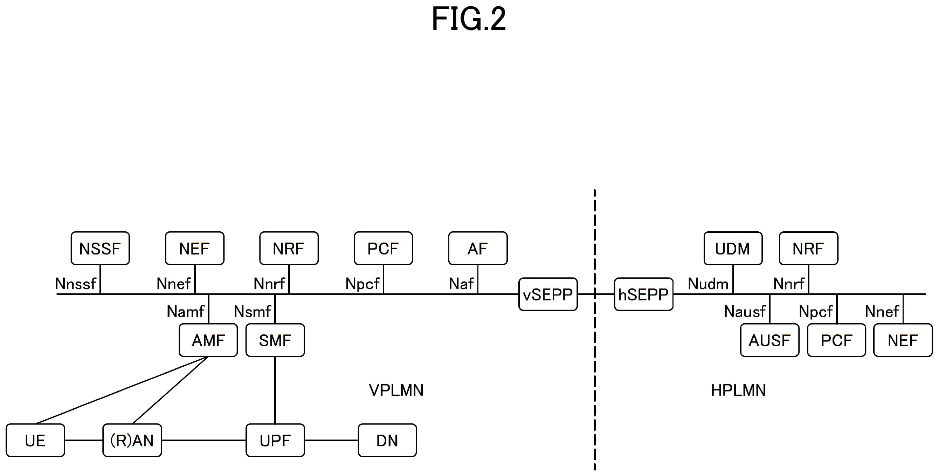

FIG. 2 is a diagram for explaining an example of a communication system in a roaming environment. As illustrated in FIG. 2, the network includes a UE, which is the terminal 20, and a plurality of network nodes.

A SEPP is a non-transparent proxy that filters control-plane messages between PLMNs (Public Land Mobile Networks). The vSEPP shown in FIG. 2 is a SEPP in a visited network, and the hSEPP is a SEPP in a home network.

As illustrated in FIG. 2, the UE 20 is in a roaming environment in which it is connected to the (R)AN and the AMF 30 in a VPLMN (Visited PLMN). The VPLMN and an HPLMN (Home PLMN) are connected via the vSEPP and the hSEPP. The UE 20 can communicate with, for example, a UDM in the HPLMN via the AMF 30 of the VPLMN.

### (Regarding SSI)

As described above, in recent years, as a new concept of identity management, the concept of self-sovereign identity (SSI) and technologies for implementing the same (W3C Decentralized Identifiers (DIDs), W3C Verifiable Credentials (VCs), and the like) have been studied, in which a user manages his or her own identifier and identity by himself or herself and controls where they are provided, without relying on a centralized identity provider (ID provider) or the like.

In the world of SSI, there are three parties: a Holder, an Issuer, and a Verifier. The Holder is a user or the like who manages/holds his or her own digital identity. The Issuer issues an attribute/qualification credential (for example, a VC) to the user or the like after certifying attribute information (name, age, address, and the like), qualification information (being an employee of a certain company, being a member of a certain service, and the like), and the like. The Verifier requests and receives, from the Holder, an attribute/qualification credential (VC) necessary for service provision, thereby verifying the attributes, qualifications, and the like of the Holder and determining whether to provide a service or the like.

An example of an attribute/qualification credential is a VC (Verifiable Credential). A VC is a signed document storing personal data. The above attribute information and qualification information are examples of personal data. An attribute/qualification credential may also be referred to as a credential storing personal data. Further, a credential storing personal data does not necessarily need to include information capable of uniquely identifying an individual, and, for example, an anonymously issued membership card also corresponds to a credential storing personal data.

Further, as identifiers of the Issuer and the Holder, for example, DIDs (Decentralized Identifiers) are used. A DID is registered in a distributed ledger and is easily accessible, but difficult to tamper with.

### (Regarding the Problem)

In a conventional carrier NW (network), authentication for connecting a UE to the NW is performed based on a SUPI included in a SIM mounted in the UE.

By performing NW connection of the UE based on authentication based on an attribute/qualification credential using a DID, a VC, and the like, for example, the following become possible.

- Accommodating needs for management of self-sovereign identity
- Simplifying user identity verification (for example, KYC) by using an attribute/qualification credential of a user certified by a third party other than a carrier
- Realizing a new NW connection service for specific service subscribers
- Allowing various UEs to use the NW without depending on a SIM

However, in a conventional 3GPP NW, there is no mechanism for realizing NW connection of a UE based on authentication that is based on an attribute/qualification credential.

Below, a first embodiment, a second embodiment, and a third embodiment will be described as techniques for solving the above problem. First, "Overview of Embodiments" and "Example of System Configuration", which are matters in common for the first embodiment, the second embodiment, and the third embodiment, will be described, and then each of the first embodiment, the second embodiment, and the third embodiment will be described. Note that the first embodiment, the second embodiment, and the third embodiment may be implemented in any combination.

### (Overview of Embodiments)

First, an overview of the embodiments will be described. In the present embodiment, a NW Registration authentication function using an attribute/qualification credential such as a VC (an authentication function based on an attribute/qualification credential) is added to a 3GPP NW. In the present embodiment, two patterns are assumed for this authentication function: one in which it is defined as a new NF (Network Function), and one in which an existing function such as the AUSF is extended.

The "3GPP NW" may also be referred to as a core network specified by 3GPP (registered trademark). In the present embodiment, the "network" is described by taking the "3GPP NW" as an example; however, the technique according to the present invention is applicable to a network not limited to the "3GPP NW".

In each embodiment, a specific example of authentication logic using an attribute/qualification credential will be described; however, this authentication logic is merely an example and is not limited thereto.

In the present embodiment, an IF (C-Plane) relating to NW Registration using an attribute/qualification credential between the UE and the 3GPP NW is added to the existing 3GPP NW. Specifically, this is as follows in (1) and (2) below.

(1) An IF is added for transmitting an attribute/qualification credential from the UE to the 3GPP NW by C-Plane communication. There are two patterns: one in which it is defined as a new IF, and one in which information transmitted in a Registration Request is added.
(2) An IF is added for notifying, to the UE, a result from an authentication function that performs authentication processing using an attribute/qualification credential. There are two patterns: one in which it is defined as a new IF, and one in which an existing IF is extended.

Further, in the present embodiment, logic is added for permitting NW Registration and enabling D-Plane communication after successful authentication using an attribute/qualification credential.

Further, in the present embodiment, by using information in the attribute/qualification credential, subscriber information can be registered in the UDM so that billing and the like can be carried out. This subscriber information registration function is described in the first embodiment, but similarly in the second embodiment and the third embodiment, registration in the UDM by this subscriber information registration function can also be performed.

### (Example of System Configuration)

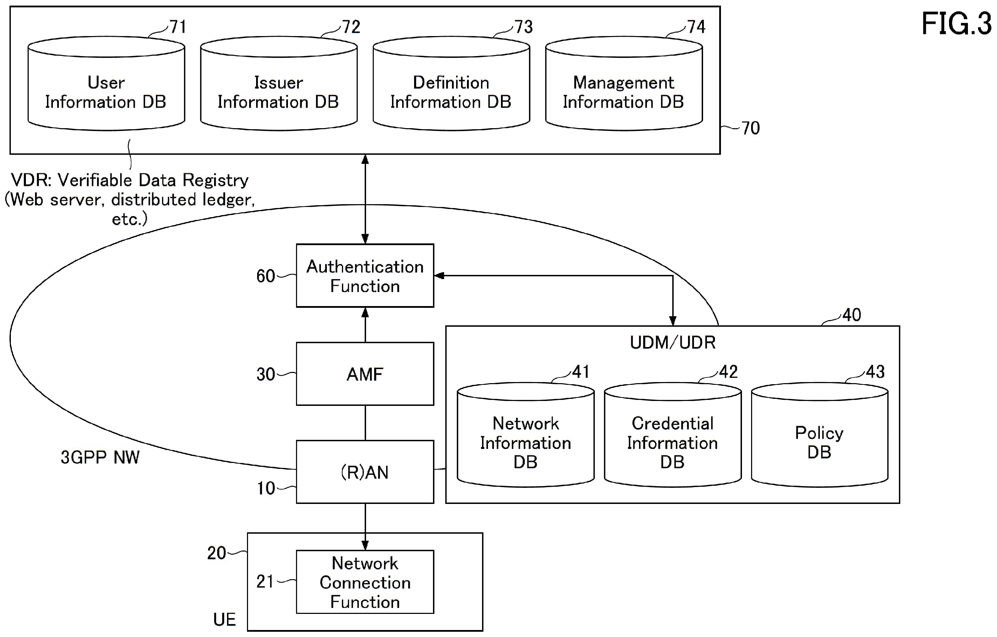

FIG. 3 illustrates an example of a system configuration common to the first to third embodiments. As illustrated in FIG. 3, a communication system according to the present embodiment includes a UE 20, a (R)AN 10, an authentication function 60 that performs authentication based on an attribute/qualification credential, a UDM/UDR (40), and a VDR (VDR: Verifiable Data Registry) 70. Since the UDM 40 is used together with the UDR, it is described as UDM/UDR. The "authentication function 60" shown here may be a newly defined apparatus (network node), or may be an extension of a function of an existing apparatus (for example, the AUSF). In the description of each embodiment, the "authentication function 60" is described as a newly defined apparatus (network node).

The UE 20 includes a NW connection function 21. The NW connection function 21 executes the operations in each sequence described below. The UE 20 may also be referred to as the terminal 20.

As illustrated in FIG. 3, the UDM/UDR (40) includes a NW information DB (database) 41, a credential information DB 42, and a policy DB 43.

The NW information DB 41 stores a NW identifier, a public key of the NW, and a private key of the NW. The credential information DB 42 stores information on credentials available for NW connection. The policy DB 43 stores an authentication method selection policy. The above NW is a 3GPP NW, and, for example, the "NW identifier" (and similarly, the public key of the NW and the private key of the NW) may be an identifier common to a plurality of network nodes in the 3GPP NW, or may be an identifier used for a specific network node in the 3GPP NW.

In the present embodiment, the VDR 70 is arranged outside the 3GPP NW. However, the configuration is not limited to one in which the VDR 70 is arranged outside the 3GPP NW, and the VDR 70 may be provided within the 3GPP NW.

The VDR 70 is an apparatus that can be realized by a Web server, a distributed ledger, or the like. The VDR 70 includes a user information DB 71, an issuer information DB 72, a definition information DB 73, and management information DB 74.

The user information DB 71 stores a user identifier and a public key of the user. The issuer information DB 72 stores an identifier of an issuer of an attribute/qualification credential used for NW connection authentication, and a public key of the issuer. The definition information DB 73 stores schemas and definition information of the attribute/qualification credential. The management information DB 74 stores management information indicating validity/revocation of the attribute/qualification credential.

Note that "user" and "UE" (or "terminal") may be used synonymously. Unless a contradiction arises in context, the "user" described below may be replaced with "UE" or "terminal."

### (First Embodiment: Overview)

First, the first embodiment will be described. The first embodiment is the most basic embodiment. Below, an example using the authentication function 60, which is a newly defined network node, as the "authentication function" will be described as processing sequence example 1, and an example using the AUSF 80 as the "authentication function" will be described as processing sequence example 2.

### (First Embodiment: Processing Sequence Example 1)

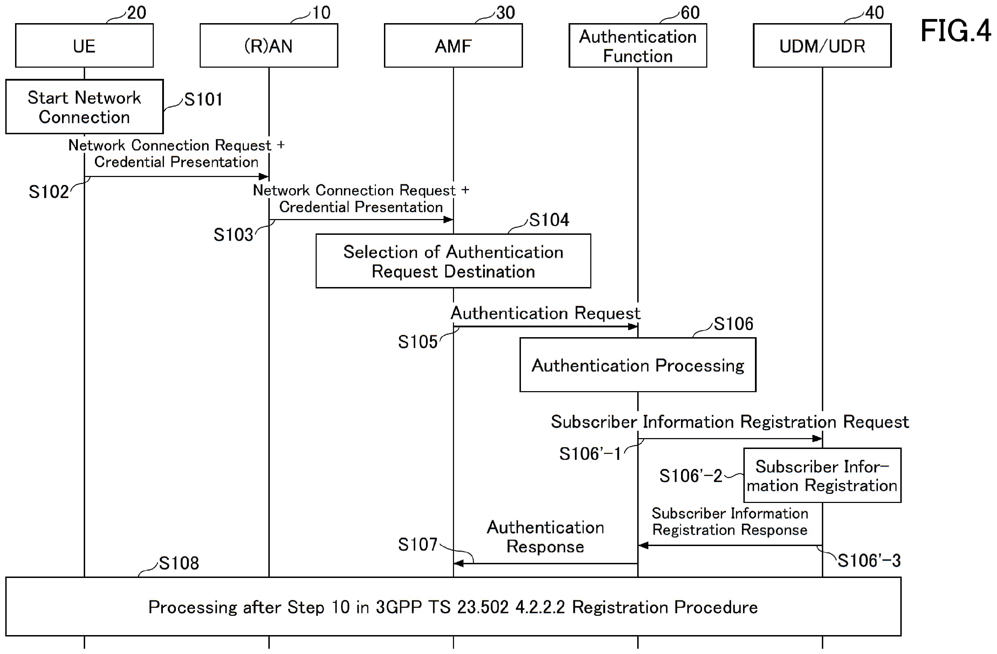

With reference to FIG. 4, processing sequence example 1 in the first embodiment will be described. Processing sequence example 1 is an example in which a new NF and a new IF are used. Preconditions for the processing are as follows.

A user has a public key/private key pair corresponding to his or her own identifier, and stores, in the VDR 70 located in a place accessible by the 3GPP NW, the user's own identifier in association with the public key.

The user holds an attribute/qualification credential (one available for NW connection) issued by any entity (a company, another user, or the like).

A credential issuer has a public key/private key pair corresponding to its own identifier, and stores, in the VDR 70 located in a place accessible by the 3GPP NW, the issuer's own identifier in association with the public key.

The credential issuer stores, in the VDR 70 located in a place accessible by the 3GPP NW, a format (schema or definition) of the credential issued by the issuer itself and information for enabling verification of the validity of the credential. The sequence will be described below.

In S101 (step 101) of FIG. 4, NW connection processing using an attribute/qualification credential is started, triggered by, for example, a user's operation of an NW connection application or power-on of the UE 20.

In S102, the UE 20 transmits, to the (R)AN 10 of the 3GPP NW, a NW connection request message requesting NW connection by an attribute/qualification credential, the NW connection request message including a user identifier (for example, a DID) and a user's attribute/qualification credential (for example, a VC). A signature (for example, a VP: Verifiable Presentation) generated by the UE 20 using a private key corresponding to the user identifier is added to the NW connection request message. The "NW connection request message" may also be referred to as a "connection request message." An example of the "connection request message" includes a Registration Request message described later.

The NW connection request message includes, in addition to information used for authentication, information similar to information included in a Registration Request message, which is a message for an NW connection authentication request using a SUPI/SUCI.

In S103, the (R)AN 10 forwards the NW connection request message received from the UE 20 to the AMF 30.

In S104, when the AMF 30 receives the NW connection request message requesting NW connection by an attribute/qualification credential, the AMF 30 selects the authentication function 60 as an authentication request destination. In S105, the AMF 30 transmits, to the authentication function 60, an authentication request message including the attribute/qualification credential included in the NW connection request message.

In S106, the authentication function 60 verifies the received attribute/qualification credential by executing authentication processing using the attribute/qualification credential. The processing here corresponds to step 9 of the Registration Procedure of 3GPP TS 23.502 4.2.2.2. S106'-1 to S106'-3 will be described later.

In S107, the authentication function 60 transmits, to the AMF 30, an authentication response including an authentication result (success/failure).

In subsequent S108, connection processing (which may also be referred to as registration processing) is executed. Specifically, NW Registration processing is completed by executing the processing of step 10 and subsequent steps, which are steps after the authentication processing of step 9 in the Registration Procedure of 3GPP TS 23.502 4.2.2.2 (Figure 4.2.2.2.2-1: Registration procedure).

The processing of the UE 20 after step 10 includes, for example, reception of Registration Accept and transmission of Registration Complete.

After successful authentication in S106, the optional processing of S106'-1 to S106'-3 below may be executed for billing and the like.

In S106'-1, the authentication function 60 transmits a subscriber information registration request to the UDM/UDR (40). The subscriber information registration request includes information such as the received user identifier and the name and address of the user included in the received attribute/qualification credential. The UDM/UDR (40) registers these pieces of information as subscriber information of the user, and returns a subscriber information registration response in S106'-3.

In the above optional mode, it is assumed that the message transmitted in S102 includes, in addition to the attribute/qualification credential used for NW connection, another attribute/qualification credential in which information necessary for billing and the like is described. When "attribute/qualification credential" is recited, it may be interpreted that the "attribute/qualification credential" includes, in addition to the attribute/qualification credential used for NW connection, another attribute/qualification credential in which information necessary for billing and the like is described.

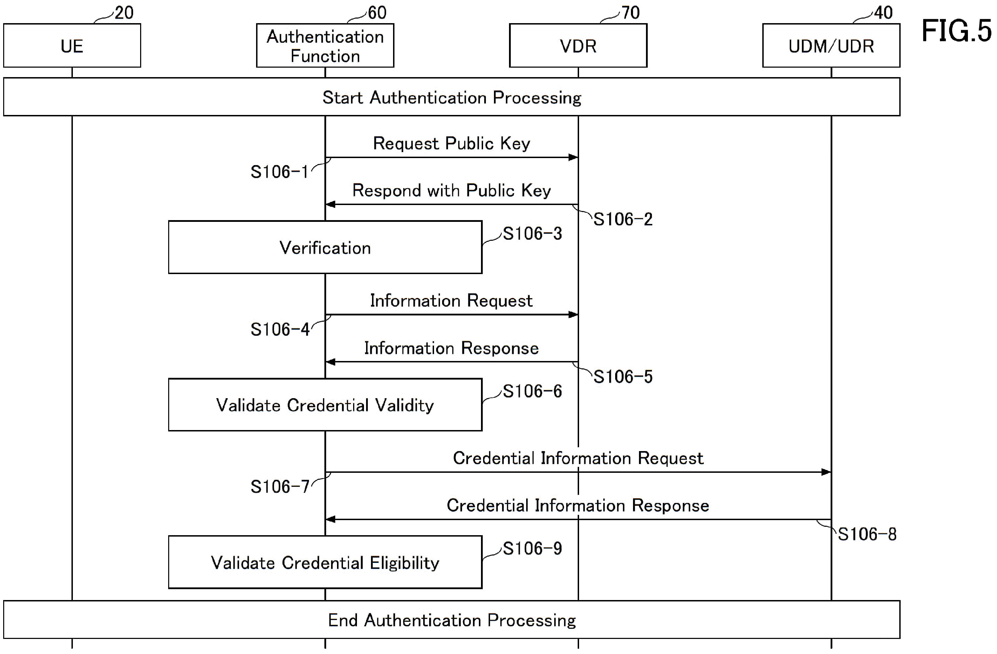

Next, with reference to FIG. 5, details of the authentication processing of S106 will be described. Here, as an example of authentication/verification processing logic, verification of an attribute/qualification credential in W3C DID/VC/VP format is assumed. In each embodiment, authentication processing using an attribute/qualification credential is processing for authenticating a user (or the terminal 20) using the attribute/qualification credential.

When authentication processing using an attribute/qualification credential is started, in S106-1, the authentication function 60 requests, from the VDR 70, a public key corresponding to the identifier of the credential issuer (Issuer) and a public key corresponding to the identifier of the user. In S106-2, the VDR 70 responds to the authentication function 60 with these public keys.

In S106-3, the authentication function 60 verifies the validity of each of the signature of the credential issuer and the signature of the user, and verifies that there has been no message tampering.

Communication between the authentication function 60 within the 3GPP NW and the VDR 70 outside the 3GPP NW may be performed via a node (for example, the NEF or the SCEF) that mediates communication between the authentication function 60 within the 3GPP NW and the VDR 70 outside the 3GPP NW.

More specifically, with respect to S106-1 to S106-3, in S106-1 and S106-2, the authentication function 60 uses DID0 (the identifier of the credential issuer) and DID1 (the identifier of the user) included in the received VP/VC as inputs, and obtains (resolves), from the VDR 70, a DID Document (public key) corresponding to DID0 and a DID Document (public key) corresponding to DID1 by using any DID Method. In S106-3, the authentication function 60 verifies that the Holder signature of the VP and the Issuer signature of the VC are signatures by private keys associated with the corresponding public keys (that is, the validity of the signatures and the absence of message tampering).

In S106-4, the authentication function 60 requests, from the VDR 70, information regarding the format of the credential and status information (revocation status and the like). In S106-5, the VDR 70 responds with the format of the credential and the status information. In S106-6, the authentication function 60 verifies the validity of the credential.

More specifically, regarding S106-4 to S106-6, the authentication function 60 obtains, from the VDR 70, a VC schema, definition information, and the like, and verifies that the syntax and the like of the VC are correct. Further, the authentication function 60 obtains, from the VDR 70, validity information/revocation information of the VC, and verifies that the received VC is valid.

In S106-7, the authentication function 60 requests, from the UDM/UDR (40), credential information available for NW connection, and in S106-8, the UDM/UDR (40) responds with the credential information. In S106-9, the authentication function 60 performs credential eligibility verification. More specifically, the authentication function 60 verifies that conditions for a VC available for NW connection are satisfied (for example, that it is a My Number VC and that it includes necessary information such as name and address). Note that the My Number VC is assumed to be information equivalent to the current My Number converted into VC format.

When the authentication function 60 determines that all of the above verification results are OK, the authentication function 60 determines that authentication has succeeded.

### (First Embodiment: Processing Sequence Example 2)

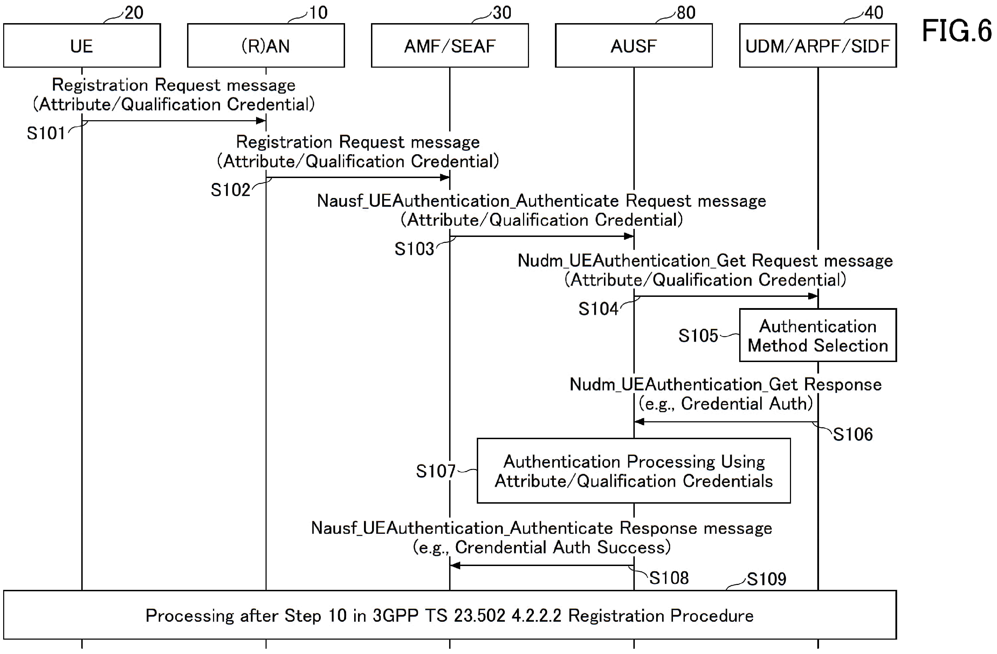

Next, with reference to FIG. 6, processing sequence example 2 in the first embodiment will be described. Processing sequence example 2 is an example in which an existing NF and an existing IF are extended. In processing sequence example 2, the AUSF 80 includes a function of performing authentication based on an attribute/qualification credential. By this function, the authentication processing of S107 described later and the like are performed.

In the UDM 40, an authentication method selection function based on an attribute/qualification credential at the time of authentication method selection (S105), and the following information used in the attribute/qualification credential method, are held.

- a NW identifier, and a public key and a private key associated with the identifier
- information on credentials available for NW connection (credential type, data format, information that should be included in the credential, and the like)

The sequence will be described with reference to FIG. 6.

In S101, the UE 20 includes an attribute/qualification credential in a Registration Request message, and transmits the Registration Request message including the attribute/qualification credential to the (R)AN 10. In S102, the (R)AN 10 transmits the Registration Request message including the attribute/qualification credential to the AMF/SEAF (30).

In S103, the AMF/SEAF (30) includes the attribute/qualification credential in a Nausf_UEAuthentication_Authenticate Request message, and transmits the Nausf_UEAuthentication_Authenticate Request message including the attribute/qualification credential to the AUSF 80 as an authentication request.

In S104, the AUSF 80 includes the attribute/qualification credential in a Nudm_UEAuthentication_Get Request message, and transmits the Nudm_UEAuthentication_Get Request message including the attribute/qualification credential to the UDM/ARPF/SIDF (40) as an authentication request.

In S105, the UDM/ARPF/SIDF (40) performs Authentication Method Selection. Specifically, when the received message includes no SUPI or SUCI and includes an attribute/qualification credential, the UDM/ARPF/SIDF (40) selects authentication based on an attribute/qualification credential as the authentication method. Further, when both a SUPI or SUCI and an attribute/qualification credential are included, the authentication method is selected based on a pre-registered authentication method selection policy or a user request.

In S106, the UDM/ARPF/SIDF (40) includes, in a Nudm_UEAuthentication_Get Response message, a character string (for example, Credential Auth) indicating that the attribute/qualification credential authentication method has been selected, and transmits the Nudm_UEAuthentication_Get Response message including the character string to the AUSF 80.

In S107, the AUSF 80 performs authentication processing using the attribute/qualification credential.

In S108, the AUSF 80 includes, in a Nausf_UEAuthentication_Authenticate Response message, a character string (for example, Credential Auth Success) indicating that authentication by the attribute/qualification credential has succeeded, and transmits the Nausf_UEAuthentication_Authenticate Response message including the character string to the AMF/SEAF (30).

Thereafter, in S109, the processing of step 10 and subsequent steps of the Registration Procedure of 3GPP TS 23.502 4.2.2.2 is executed, and the NW Registration processing is completed. In the NW Registration processing, the API based on a SUPI/SUCI and the subscriber information registration processing based on a SUPI/SUCI are extended so as to be executable using a user identifier (DID or the like) included in the attribute/qualification credential.

As in the case of the Registration Request message, an attribute/qualification credential is also added to a Mobility Registration Update/Periodic Registration Update message.

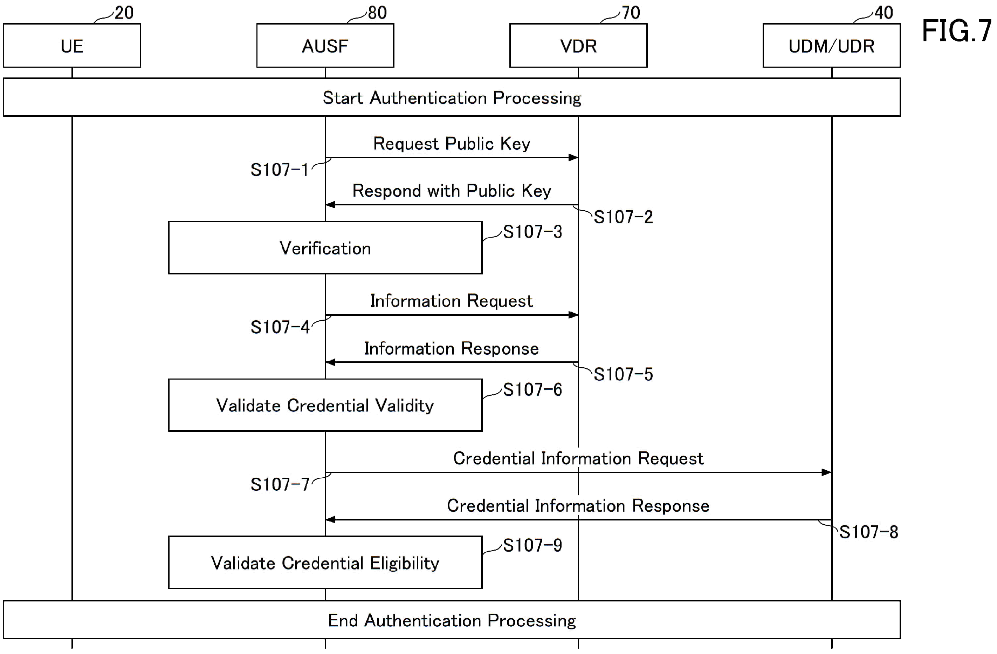

With reference to FIG. 7, details of the authentication processing of S107 will be described. Here, as in processing sequence example 1, verification of an attribute/qualification credential in W3C DID/VC/VP format is assumed as an example of verification processing logic. In the following sequence, communication between the AUSF 80 and the VDR 70 or the UDM 40 is all performed by new C-Plane messages.

When authentication processing using an attribute/qualification credential is started, in S107-1, the AUSF 80 requests, from the VDR 70, an identifier corresponding to the identifier of the credential issuer (Issuer) and a public key corresponding to the identifier of the user. In S107-2, the VDR 70 responds to the AUSF 80 with these public keys.

In S107-3, the AUSF 80 verifies the validity of each of the signature of the credential issuer and the signature of the user, and verifies that there has been no message tampering.

Communication between the AUSF 80 within the 3GPP NW and the VDR 70 outside the 3GPP NW may be performed via a node (for example, the NEF or the SCEF) that mediates the communication.

More specifically, regarding S107-1 to S107-3, in S107-1 and S107-2, the AUSF 80 uses DID0 (the identifier of the credential issuer) and DID1 (the identifier of the user) included in the received VP/VC as inputs, and obtains (resolves), from the VDR 70, a DID Document (public key) corresponding to DID0 and a DID Document (public key) corresponding to DID1 by using any DID Method. In S107-3, the AUSF 80 verifies that the Holder signature of the VP and the Issuer signature of the VC are signatures by private keys associated with those public keys (that is, the validity of the signatures and the absence of message tampering).

In S107-4, the AUSF 80 requests, from the VDR 70, information regarding the format of the credential and status information (revocation status and the like). In S107-5, the VDR 70 responds with the format of the credential and the status information. In S107-6, the AUSF 80 verifies the validity of the credential.

More specifically, regarding S107-4 to S107-6, the AUSF 80 obtains, from the VDR 70, a VC schema, definition information, and the like, and verifies that the syntax and the like of the VC are correct. Further, the AUSF 80 obtains, from the VDR 70, validity information/revocation information of the VC, and verifies that the received VC is valid.

In S107-7, the AUSF 80 requests, from the UDM/UDR (40), credential information available for NW connection, and in S107-8, the UDM/UDR (40) responds with the credential information. In S107-9, the AUSF 80 performs credential eligibility verification. More specifically, the AUSF 80 verifies that conditions for a VC available for NW connection are satisfied (for example, that it is a My Number VC and that it includes necessary information such as name and address).

When the AUSF 80 determines that all of the above verification results are OK, the AUSF 80 determines that authentication has succeeded.

S107-7 to S107-8 may be omitted by including the credential information obtained in S107-7 to S107-8 in the message of S106 of FIG. 6 and transmitting the message.

### (Effects of First Embodiment)

According to the technique of the first embodiment, the terminal 20 can connect to the NW based on authentication that is based on an attribute/qualification credential.

### (Overview of Second Embodiment)

Next, the second embodiment will be described. In the second embodiment, with respect to the basic method described in the first embodiment, a method and IF are additionally provided in which the NW side notifies the UE of, or negotiates with the UE about, an attribute/qualification credential that the UE is to provide for NW authentication.

Below, an example using the authentication function 60, which is a newly defined network node, as the "authentication function" will be described as processing sequence example 1, and an example using the AUSF 80 as the "authentication function" will be described as processing sequence example 2.

### (Second Embodiment: Processing Sequence Example 1)

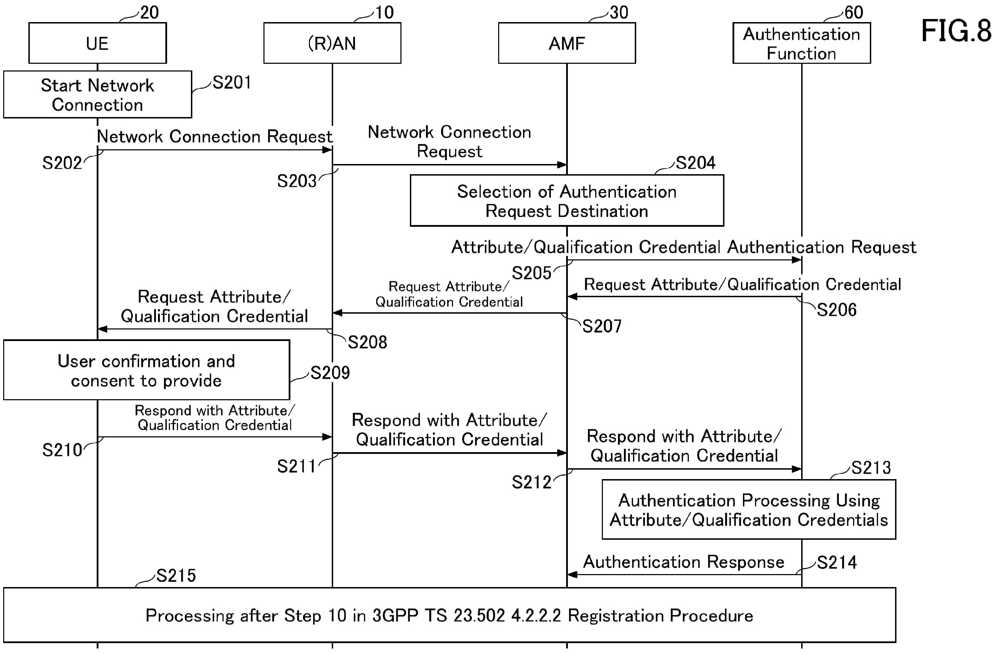

With reference to FIG. 8, processing sequence example 1 in the second embodiment will be described. Processing sequence example 1 is an example in which a new NF and a new IF are used. Preconditions for the processing are as follows.

A user has a public key/private key pair corresponding to his or her own identifier, and stores, in the VDR 70 located in a place accessible by the 3GPP NW, the user's own identifier in association with the public key.

The user holds an attribute/qualification credential (one available for NW connection) issued by any entity (a company, another user, or the like).

A credential issuer has a public key/private key pair corresponding to its own identifier, and stores, in the VDR 70 located in a place accessible by the 3GPP NW, the issuer's own identifier in association with the public key.

The credential issuer stores, in the VDR 70 located in a place accessible by the 3GPP NW, a format (schema or definition) of the credential issued by the issuer itself and information for enabling verification of the validity of the credential.

The sequence will be described below.

In S201 of FIG. 8, NW connection processing using an attribute/qualification credential is started, triggered by, for example, a user's operation of an NW connection application or power-on of the UE 20.

In S202, the UE 20 transmits, to the (R)AN 10 of the 3GPP NW, an NW connection request message requesting NW connection by an attribute/qualification credential.

The NW connection request message may include a user identifier (for example, a DID). Further, the message may be signed with a private key corresponding to the user identifier and then transmitted.

The NW connection request message includes, in addition to information used for authentication, information similar to information included in a Registration Request message, which is a message for a NW connection authentication request using a SUPI/SUCI.

In S203, the (R)AN 20 forwards the NW connection request message received from the UE 20 to the AMF 30.

In S204, when the AMF 30 receives the NW connection request message requesting NW connection by an attribute/qualification credential, the AMF 30 selects the authentication function 60 based on the attribute/qualification credential as an authentication request destination. In S205, the AMF 30 transmits, to the authentication function 60, an authentication request message requesting authentication based on the attribute/qualification credential. Here, it is assumed that the authentication request message does not include the attribute/qualification credential.

When confirming that the received authentication request message does not include the attribute/qualification credential, the authentication function 60 transmits, to the AMF 30, a message for requesting the UE 20 to provide an attribute/qualification credential desired for NW connection. The message includes information (conditions) indicating the attribute/qualification credential desired to be provided. Examples of the conditions are as follows. The message includes any one or more of the following five pieces of information. The message may also include information other than the following five pieces of information.

- type of credential (My Number VC, etc.)
- data format/encoding format of the credential (W3C VC, JWT, etc.)
- information to be included in the credential (name, age, etc.)
- signature algorithm or signature format
- version

The information (conditions) indicating an attribute/qualification credential available for NW connection may be held in storage of the authentication function 60, or may be obtained from information stored in the UDM 40 or the like.

In S207, the AMF 30 forwards the message received from the authentication apparatus 60 to the (R)AN 10. In S208, the (R)AN 10 forwards the message to the UE 20.

In S209, the UE 20 displays, on a display, the information included in the message received from the (R)AN 10, and the user of the UE 20 confirms the requested conditions of the attribute/qualification credential.

When the user agrees to provide the information, in S210, the UE 20 transmits a response message including the requested attribute/qualification credential (for example, a VC) and the user identifier (for example, a DID). A signature (for example, a VP) generated by the UE 20 with the private key corresponding to the user identifier is added to the response message.

In the above example, the user (person) confirms the conditions; however, the UE 20 may automatically confirm the conditions.

Upon receiving the response message, the (R)AN 10 forwards the response message to the AMF 30 in S211. In S212, the AMF 30 forwards the response message to the authentication function 60.

In S213, the authentication function 60 verifies the received attribute/qualification credential by executing authentication processing using the attribute/qualification credential. In S214, the authentication function 60 transmits, to the AMF 30, an authentication response including an authentication result (success/failure).

In subsequent S215, connection processing is executed. Specifically, the NW Registration processing is completed by executing the processing of step 10 and subsequent steps of the Registration Procedure of 3GPP TS 23.502 4.2.2.2.

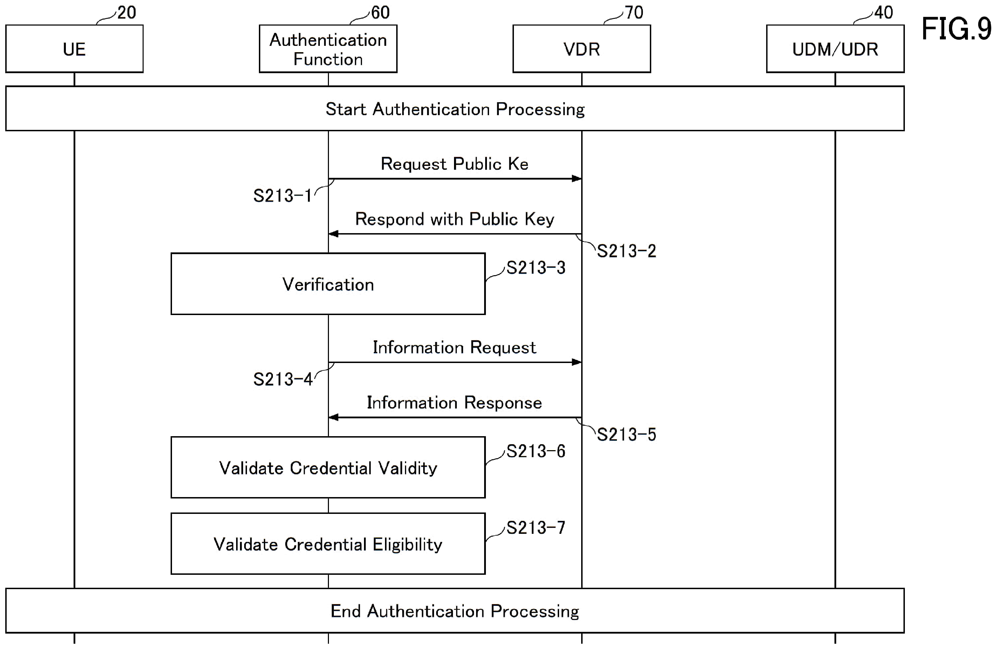

Next, with reference to FIG. 9, details of S213 will be described. Here, as an example of authentication/verification processing logic, verification of an attribute/qualification credential in W3C DID/VC/VP format is assumed. Note that authentication processing using an attribute/qualification credential is described as the same processing in each embodiment.

When authentication processing using an attribute/qualification credential is started, in S213-1, the authentication function 60 requests, from the VDR 70, a public key corresponding to the identifier of the credential issuer (Issuer) and a public key corresponding to the identifier of the user. In S213-2, the VDR 70 responds to the authentication function 60 with these public keys.

In S213-3, the authentication function 60 verifies the validity of the signature of the credential issuer and the signature of the user, and the absence of message tampering.

Communication between the authentication function 60 and the VDR 70 may be performed via a node (for example, the NEF or the SCEF) that mediates communication between the authentication function 60 within the 3GPP NW and the VDR 70 outside the 3GPP NW.

More specifically, regarding S213-1 to S213-3, in S213-1 and S213-2, the authentication function 60 uses DID0 (the identifier of the credential issuer) and DID1 (the identifier of the user) included in the received VP/VC as inputs, and obtains (resolves), from the VDR 70, a DID Document (public key) corresponding to DID0 and a DID Document (public key) corresponding to DID1 by using any DID Method. In S213-3, the authentication function 60 verifies that the Holder signature of the VP and the Issuer signature of the VC are signatures by private keys associated with those public keys (that is, the validity of the signatures and the absence of message tampering).

In S213-4, the authentication function 60 requests, from the VDR 70, information regarding the format of the credential and status information (revocation status and the like). In S213-5, the VDR 70 responds with the format of the credential and the status information. In S213-6, the authentication function 60 verifies the validity of the credential.

More specifically, regarding S213-4 to S213-6, the authentication function 60 obtains, from the VDR 70, a VC schema, definition information, and the like, and verifies that the syntax and the like of the VC are correct. Further, the authentication function 60 obtains, from the VDR 70, validity information/revocation information of the VC, and verifies that the received VC is valid.

In S213-7, the authentication function 60 performs credential eligibility verification. More specifically, the authentication function 60 verifies that conditions for a VC available for NW connection are satisfied (for example, that it is a My Number VC and that it includes necessary information such as name and address). Note that the conditions here have already been obtained in order to make the request in S206 of FIG. 8.

When the authentication function 60 determines that all of the above verification results are OK, the authentication function 60 determines that authentication has succeeded.

### (Second Embodiment: Processing Sequence Example 2)

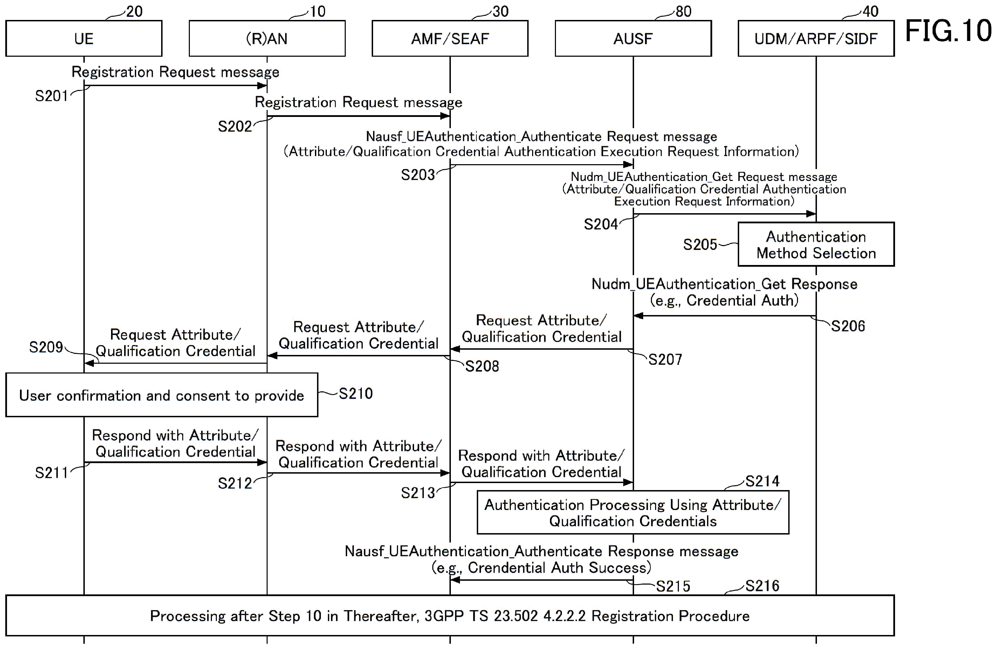

Next, with reference to FIG. 10, processing sequence example 2 in the second embodiment will be described. Processing sequence example 2 is an example in which an existing NF and an existing IF are extended. In processing sequence example 2, the AUSF 80 includes a function for performing authentication based on an attribute/qualification credential. By this function, authentication processing of S207 and the like described later are performed.

In the UDM 40, an authentication method selection function based on an attribute/qualification credential at the time of authentication method selection (used in S205), and the following information used in the attribute/qualification credential method, are held.

- a NW identifier, and a public key and a private key associated with the identifier
- information on credentials available for NW connection (credential type, data format, information that should be included in the credential, and the like)

The sequence will be described with reference to FIG. 10.

In S201, the UE 20 includes, in a Registration Request message, information (for example, an arbitrary character string) indicating a request to execute authentication using an attribute/qualification credential, and transmits the Registration Request message including the information to the (R)AN 10. In S202, the (R)AN 10 transmits the Registration Request message including the information to the AMF/SEAF (30).

In S203, the AMF/SEAF (30) includes, in a Nausf_UEAuthentication_Authenticate Request message, information indicating a request to execute authentication using an attribute/qualification credential, and transmits the Nausf_UEAuthentication_Authenticate Request message including the information to the AUSF 80 as an authentication request.

In S204, the AUSF 80 transmits, to the UDM/ARPF/SIDF (40) as an authentication request, a Nudm_UEAuthentication_Get Request message including the above information.

In S205, the UDM/ARPF/SIDF (40) performs Authentication Method Selection. Specifically, when the received message includes no SUPI or SUCI and includes information requesting execution of attribute/qualification credential authentication, the UDM/ARPF/SIDF (40) selects authentication based on an attribute/qualification credential as the authentication method. Further, when both a SUPI or SUCI and the information requesting execution of attribute/qualification credential authentication are included, the authentication method is selected based on a pre-registered authentication method selection policy or a user request.

In S206, the UDM/ARPF/SIDF (40) includes, in a Nudm_UEAuthentication_Get Response message, a character string (for example, Credential Auth) indicating that the attribute/qualification credential authentication method has been selected, and transmits the Nudm_UEAuthentication_Get Response message including the character string to the AUSF 80.

Upon receiving the Nudm_UEAuthentication_Get Response message including the character string, the AUSF 80 transmits, in S207, a message requesting an attribute/qualification credential available for NW connection to the AMF/SEAF (30).

The information (conditions) regarding the attribute/qualification credential available for NW connection specified in the above request may be held in storage or the like of the AUSF 80, or may be obtained from information stored in the UDM 40 or the like. In the latter case, this information (conditions) may be notified by being included in the message of S206, or the AUSF 80 may go to obtain the information from the UDM 40 in response to receipt of the message of S206 or the like.

In S208, the AMF/SEAF (30) transmits the message to the (R)AN 10, and in S209, the (R)AN 10 transmits the message to the UE 20.

In S210, the UE 20 displays, on a display, the information included in the message received from the (R)AN 10, and the user of the UE 20 confirms the requested conditions of the attribute/qualification credential.

When the user agrees to provide the information, in S211, the UE 20 transmits a response message including the requested attribute/qualification credential (for example, a VC) and the user identifier (for example, a DID). Confirmation of the conditions may be performed automatically by the UE 20. A signature (for example, a VP) generated by the UE 20 with the private key corresponding to the user identifier is added to the response message.

Upon receiving the response message, the (R)AN 10 forwards the message to the AMF 30 in S212. In S213, the AMF 30 forwards the response message to the authentication function 60.

In S214, the authentication function 60 verifies the received attribute/qualification credential by executing authentication processing using the attribute/qualification credential.

In S215, the authentication function 60 includes, in a Nausf_UEAuthentication_Authenticate Response message, a character string (for example, Crendential Auth Success) indicating that authentication using the attribute/qualification credential has succeeded, and transmits the Nausf_UEAuthentication_Authenticate Response message including the character string to the AMF/SEAF (30).

In subsequent S216, connection processing is executed. Specifically, the NW Registration processing is completed by executing the processing of step 10 and subsequent steps of the Registration Procedure of 3GPP TS 23.502 4.2.2.2. In the NW Registration processing, the API based on a SUPI/SUCI or the subscriber information registration processing based on a SUPI/SUCI is extended so as to be executable using a user identifier (DID or the like) included in the attribute/qualification credential.

In the sequence of FIG. 10, new C-Plane messages are used in S207 to S209 and S211 to S213.

Further, an attribute/qualification credential is also added to a Mobility Registration Update/Periodic Registration Update message, similarly to the above-described example.

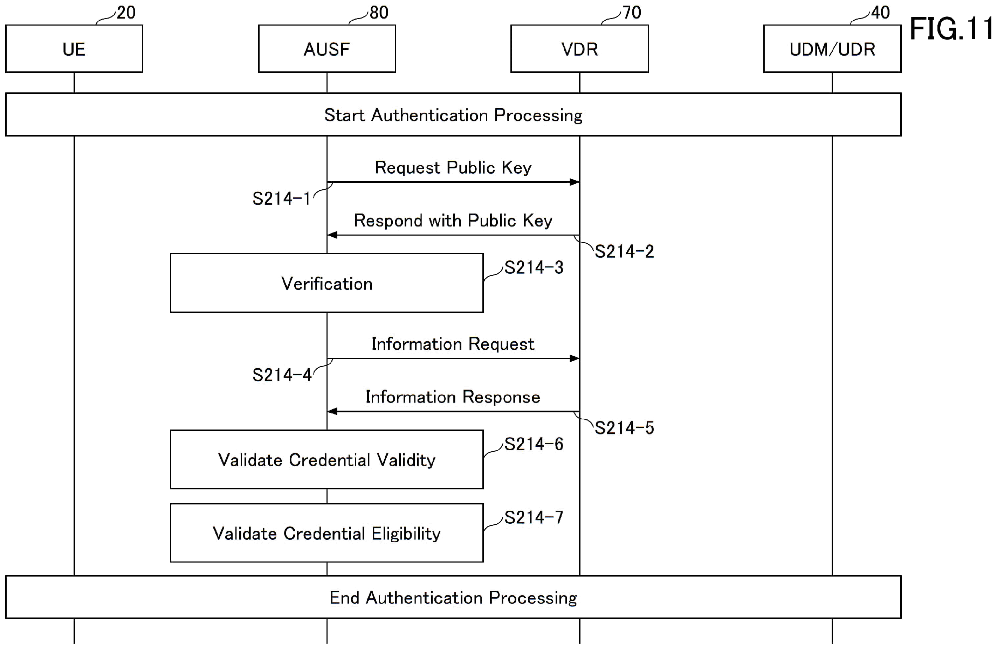

With reference to FIG. 11, details of S214 will be described. Here, as in the foregoing examples, verification of an attribute/qualification credential in W3C DID/VC/VP format is assumed as an example of authentication/verification processing logic.

When authentication processing using an attribute/qualification credential is started, in S214-1, the AUSF 80 requests, from the VDR 70, a public key corresponding to the identifier of the credential issuer (Issuer) and a public key corresponding to the identifier of the user. In S214-2, the VDR 70 responds to the AUSF 80 with these public keys.

In S214-3, the AUSF 80 verifies the validity of the signature of the credential issuer and the signature of the user, and the absence of message tampering.

Communication between the AUSF 80 and the VDR 70 may be performed via a node (for example, the NEF or the SCEF) that mediates communication between the AUSF 80 within the 3GPP NW and the VDR 70 outside the 3GPP NW.

More specifically, regarding S214-1 to S214-3, in S214-1 and S214-2, the AUSF 80 uses DID0 (the identifier of the credential issuer) and DID1 (the identifier of the user) included in the received VP/VC as inputs, and obtains (resolves), from the VDR 70, a DID Document (public key) corresponding to DID0 and a DID Document (public key) corresponding to DID1 by using any DID Method. In S214-3, the AUSF 80 verifies that the Holder signature of the VP and the Issuer signature of the VC are signatures by private keys associated with those public keys (that is, the validity of the signatures and the absence of message tampering).

In S214-4, the AUSF 80 requests, from the VDR 70, information regarding the format of the credential and status information (revocation status and the like). In S214-5, the VDR 70 responds with the format of the credential and the status information. In S214-6, the AUSF 80 verifies the validity of the credential.

More specifically, regarding S214-4 to S214-6, the AUSF 80 obtains, from the VDR 70, a VC schema, definition information, and the like, and verifies that the syntax and the like of the VC are correct. Further, the AUSF 80 obtains, from the VDR 70, validity information/revocation information of the VC, and verifies that the received VC is valid.

In S214-7, the AUSF 80 performs credential eligibility verification. More specifically, the AUSF 80 verifies that conditions for a VC available for NW connection are satisfied (for example, that it is a My Number VC and that it includes necessary information such as name and address).

When the AUSF 80 determines that all of the above verification results are OK, the AUSF 80 determines that authentication has succeeded. In the processing of FIG. 11, communication between the AUSF 80 and the VDR 70 or the UDM 40 is all executed using new C-Plane messages.

### (Effects of Second Embodiment)

According to the technique of the second embodiment, the terminal 20 can connect to the NW based on authentication that is based on an attribute/qualification credential.

Further, in the second embodiment, the authentication function 60/AUSF 80 can request, from the UE 20, an attribute/qualification credential to be used for NW connection, and the UE 20 can transmit the agreed attribute/qualification credential to the NW. Therefore, the UE 20 can avoid transmitting an unnecessary attribute/qualification credential to the NW, and the NW can obtain the necessary attribute/qualification credential and perform authentication.

### (Overview of Third Embodiment)

Next, the third embodiment will be described. In the third embodiment, with respect to the basic method described in the first embodiment, logic and IFs are additionally provided for "D-Plane communication encryption method, key generation, and key sharing" between the UE 20 and the 3GPP NW, and a method for authenticating the 3GPP NW by the UE 20 and an IF therefor are additionally provided. Only one of the addition of the logic and IFs for "D-Plane communication encryption method, key generation, and key sharing" between the UE 20 and the 3GPP NW and the addition of the method for authenticating the 3GPP NW by the UE 20 may be performed.

Below, an example using the authentication function 60, which is a newly defined network node, as the "authentication function" will be described as processing sequence example 1, and an example using the AUSF 80 as the "authentication function" will be described as processing sequence example 2.

In the third embodiment, processing sequence example 1 includes processing sequence example 1-1 and processing sequence example 1-2, and processing sequence example 2 includes processing sequence example 2-1 and processing sequence example 2-2.

In processing sequence example 1-1 and processing sequence example 2-1, communication is encrypted with a public key of the NW/user. In processing sequence example 1-2 and processing sequence example 2-2, a root key K is generated, and communication is encrypted using a common key derived from the root key K.

Each processing sequence example will be described below.

### (Third Embodiment: Processing Sequence Example 1-1)

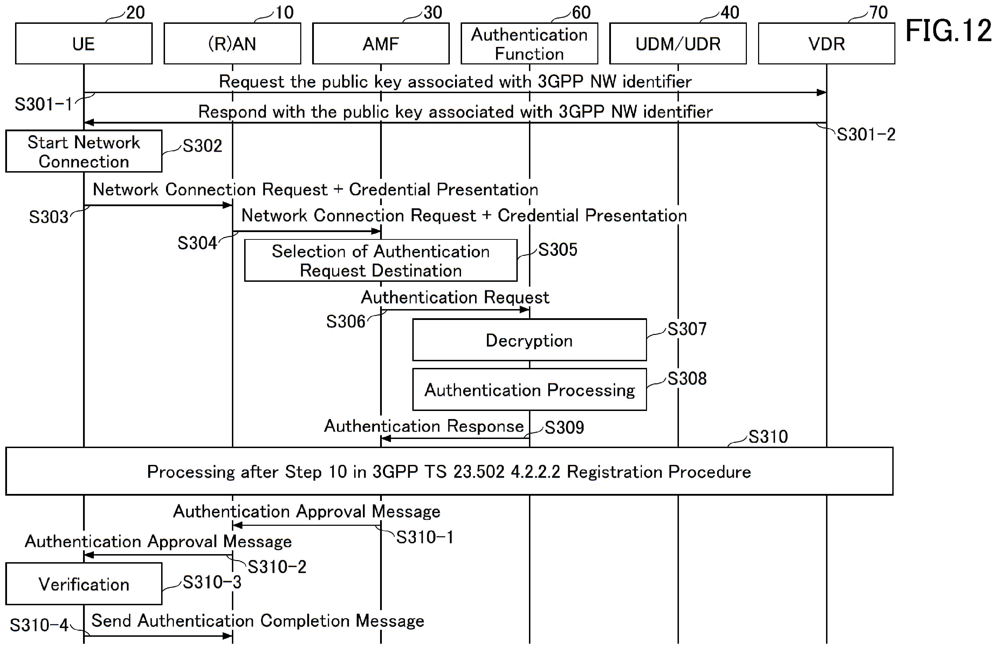

With reference to FIG. 12, processing sequence example 1-1 in the third embodiment will be described. An outline of the encryption method here is as follows.

- Communication in the UE→NW direction is encrypted with the public key of the NW and decrypted with the private key of the NW.
- Communication in the NW→UE direction is encrypted with the public key of the user and decrypted with the private key of the user.

NW authentication by the UE is realized by signing a message in the NW→UE direction with the private key of the NW and performing verification with the public key of the NW on the UE side.

Further, UE authentication by the NW is realized by signing a message in the UE→NW direction with the private key of the user (the private key corresponding to the identifier of the user) and performing verification with the public key of the user (the public key corresponding to the identifier of the user) on the NW side.

Preconditions for processing in the sequence are as follows.

A user has a public key/private key pair corresponding to his or her own identifier, and stores, in the VDR 70 located in a place accessible by the 3GPP NW, the user's own identifier in association with the public key.

The user holds an attribute/qualification credential (one available for NW connection) issued by any entity (a company, another user, or the like).

A credential issuer has a public key/private key pair corresponding to its own identifier, and stores, in the VDR 70 located in a place accessible by the 3GPP NW, the issuer's own identifier in association with the public key.

The credential issuer stores, in the VDR 70 located in a place accessible by the 3GPP NW, a format (schema or definition) of the credential issued by the issuer itself and information for enabling verification of the validity of the credential.

The 3GPP NW has a public key/private key pair corresponding to its own identifier.

A method for distributing the public key of the NW to the UE 20 is not limited to a specific method, and, for example, the following method (1) or (2) may be used.

### Method (1):

The identifier of the NW and the public key are stored in association with each other in the VDR 70 located in a place accessible by the UE 20, and the UE 20 accesses the VDR 70 at any timing to obtain the public key. In this method, it is assumed that the UE 20 holds in advance identifier information of the NW, which serves as a key when accessing the VDR.

### Method (2):

The public key is pre-installed in the UE 20 together with the NW connection function/application or the like of the UE 20.

In the sequence of FIG. 12, it is assumed that method (1) is used. In S301-1 of FIG. 12, the UE 20 requests, from the VDR 70, a public key associated with the identifier of the 3GPP NW. In S301-2, the VDR 70 responds to the UE 20 with the public key associated with the identifier of the 3GPP NW.

That is, in S301-1 to S301-2, the UE 20 obtains, from the VDR 70, the corresponding public key using the identifier of the 3GPP NW as an input.

S301-1 to S301-2 are executed, for example, by preparing a communication means other than the 3GPP NW to be connected to. Alternatively, S301-1 to S301-2 may be realized by extending the UE and the 3GPP NW so that this communication can be executed via the 3GPP NW even before connection to the 3GPP NW to be connected to.

In S302, NW connection processing using an attribute/qualification credential is started, triggered by, for example, a user's operation of an NW connection application or power-on of the UE 20.

In S303, the UE 20 transmits, to the (R)AN 20 of the 3GPP NW, an NW connection request message for requesting NW connection by an attribute/qualification credential, the NW connection request message including a user identifier (for example, a DID) and a user's attribute/qualification credential (for example, a VC). Information included in the NW connection request message is signed (for example, as a VP) by the UE 20 using the private key corresponding to the user identifier. Further, the information is encrypted by the UE 20 using the public key of the 3GPP NW. The UE 20 may include, in the NW connection request message, the public key corresponding to the user identifier, and may transmit the NW connection request message including the public key.

"Information included in the NW connection request message" includes the attribute/qualification credential. Further, "information included in the NW connection request message" may be the entirety of the "NW connection request message." That is, the information to be signed or encrypted may be only the attribute/qualification credential, may be the "attribute/qualification credential and other information," or may be the entirety of the "NW connection request message".

Hereinafter, in processing for signing or encrypting "information included in a message", similarly to the above, the processing may sign or encrypt only information inside the message, or may sign or encrypt the entire message.

That is, in the third embodiment, in both messages in the UE→ NW direction and messages in the NW→UE direction, the signature may be applied to the entire message or to information included in the message (attribute/qualification credential or the like).

Further, in both messages in the UE→NW direction and messages in the NW→UE direction, encryption may be applied to the entire message or to information included in the message (attribute/qualification credential or the like).

The NW connection request message may include, in addition to information used for authentication, information similar to information included in a Registration Request message, which is a message for a NW connection authentication request using a SUPI/SUCI.

In S304, the (R)AN 20 forwards the NW connection request message requesting NW connection by an attribute/qualification credential to the AMF 30.

In S305, when the AMF 30 receives the NW connection request message requesting NW connection by an attribute/qualification credential, the AMF 30 selects the authentication function 60 that performs authentication based on the attribute/qualification credential as an authentication request destination. In S306, the AMF 30 transmits, to the authentication function 60, an authentication request message including the attribute/qualification credential encrypted with the public key of the 3GPP NW.

In S307, the authentication function 60 decrypts information included in the received message using its own private key (that of the 3GPP NW). The private key of the 3GPP NW may be set in advance in each NF (each network node), or may be stored in a DB such as a UDM/UDR and obtained by each NF through an API or the like.

Regarding S306 above, the AMF 30 may decrypt the message with the private key of the NW and then present the plaintext attribute/qualification credential to the authentication function 60.

In S308, the authentication function 60 verifies the received attribute/qualification credential by executing authentication processing using the attribute/qualification credential. More specifically, in Primary Authentication processing (credential verification procedure) using the attribute/qualification credential, the authentication function 60 obtains, from the VDR 70, the public key corresponding to the identifier of the user and uses the public key. When the message of S303 includes the public key of the user, the public key of the user may be extracted from the message and used.

In S309, the authentication function 60 transmits, to the AMF 30, an authentication response including an authentication result (success/failure). Thereafter, communication from the 3GPP NW to the UE 20 is performed by signing the message with the private key of the NW and encrypting the message with the public key of the user.

In S310, the NW Registration processing is completed by executing the processing of step 10 and subsequent steps of the Registration Procedure of 3GPP TS 23.502 4.2.2.2. The following processing is executed as part of S310.

In S310-1, the AMF 30 transmits an authentication approval message. Information included in the authentication approval message is signed by the AMF 30 with the private key of the NW and encrypted with the public key of the user.

In S310-2, the (R)AN 10 forwards the authentication approval message to the UE 20. Information included in the authentication approval message has been signed with the private key of the NW and encrypted with the public key of the user.

In S310-3, the UE 20 decrypts information included in the received authentication approval message with the private key of the user, and verifies the signature with the public key of the NW. Since impersonation of the NW can be detected by signature verification, the signature verification corresponds to NW authentication.

After confirming that the sender of the authentication approval message is not an impersonating NW, the UE 20 encrypts information to be included in an authentication completion message with the public key of the 3GPP NW, transmits the authentication completion message including the encrypted information, and continues communication processing with the NW.

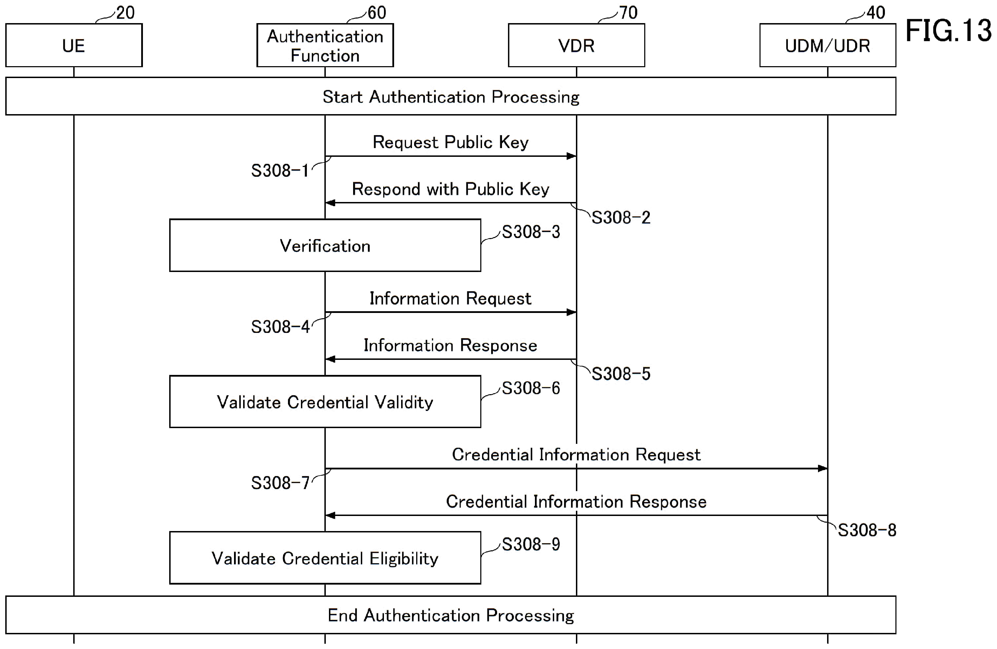

With reference to FIG. 13, details of S308 will be described. Here, as an example of authentication/verification processing logic, verification of an attribute/qualification credential in W3C DID/VC/VP format is assumed.

When authentication processing using an attribute/qualification credential is started, in S308-1, the authentication function 60 requests, from the VDR 70, a public key corresponding to the identifier of the credential issuer (Issuer) and a public key corresponding to the identifier of the user. In S308-2, the VDR 70 responds to the authentication function 60 with the public keys.

In S308-3, the authentication function 60 verifies the validity of the signature of the credential issuer and the signature of the user, as well as the absence of message tampering.

Communication between the authentication function 60 within the 3GPP NW and the VDR 70 outside the 3GPP NW may be performed via a node (for example, the NEF or the SCEF) that mediates communication between the authentication function 60 within the 3GPP NW and the VDR 70 outside the 3GPP NW.

More specifically, regarding S308-1 to S308-3, in S308-1 and S308-2, the authentication function 60 uses DID0 (the identifier of the credential issuer) and DID1 (the identifier of the user) included in the received VP/VC as inputs, and obtains (resolves), from the VDR 70, a DID Document (public key) corresponding to DID0 and a DID Document (public key) corresponding to DID1 by using any DID Method. In S308-3, the authentication function 60 verifies that the Holder signature of the VP and the Issuer signature of the VC are signatures by private keys associated with those public keys (that is, the validity of the signatures and the absence of message tampering).

In S308-4, the authentication function 60 requests, from the VDR 70, information regarding the format of the credential and status information (revocation status and the like). In S308-5, the VDR 70 responds with the format of the credential and the status information. In S308-6, the authentication function 60 verifies the validity of the credential.

More specifically, regarding S308-4 to S308-6, the authentication function 60 obtains, from the VDR 70, a VC schema, definition information, and the like, and verifies that the syntax and the like of the VC are correct. Further, the authentication function 60 obtains, from the VDR 70, validity information/revocation information of the VC, and verifies that the received VC is valid.

In S308-7, the authentication function 60 requests, from the UDM/UDR (40), credential information available for NW connection, and in S308-8, the UDM/UDR (40) responds with the credential information. In S308-9, the authentication function 60 performs credential eligibility verification. More specifically, the authentication function 60 verifies that conditions for a VC available for NW connection are satisfied (for example, that it is a My Number VC and that it includes necessary information such as name and address). When the authentication function 60 determines that all of the above verification results are OK, the authentication function 60 determines that authentication has succeeded.

When the message of S303 in FIG. 12 includes the public key of the user, S308-1 and S308-2 may be omitted.

### (Third Embodiment: Processing Sequence Example 1-2)

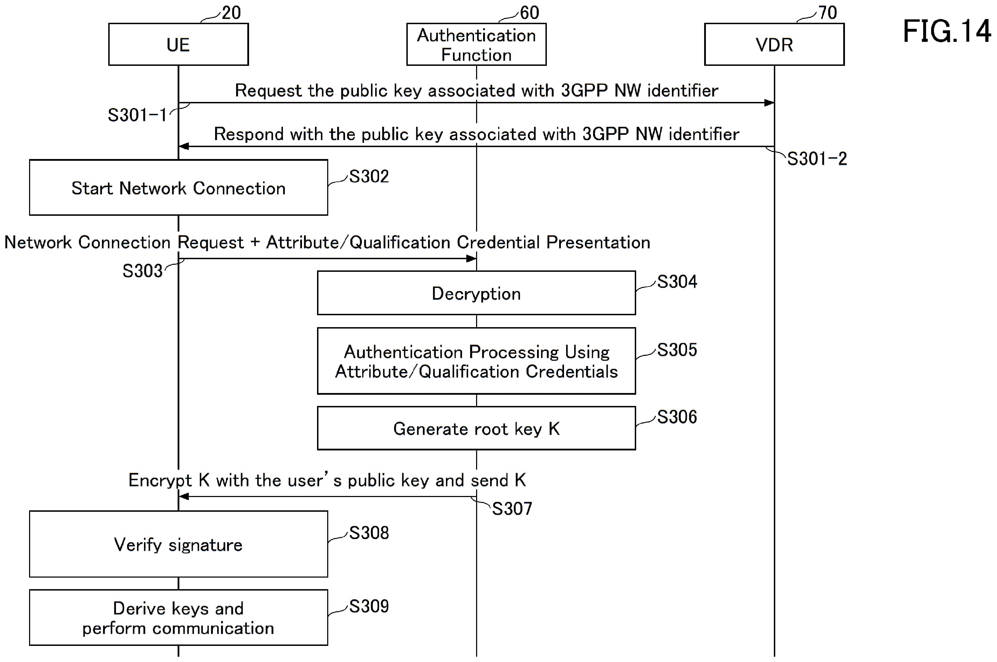

Next, processing sequence example 1-2 in the third embodiment will be described with reference to FIG. 14. Processing sequence example 1-2 differs from processing sequence example 1-1 in the encryption method. In processing sequence example 1-2, the (R)AN 10 and the AMF 30 have the same functions as in processing sequence example 1-1 and additionally handle forwarding of new messages specific to processing sequence example 1-2.

Since the processing of the (R)AN 10 and the AMF 30 in processing sequence example 1-2 is basically the same as the processing of the (R)AN 10 and the AMF 30 in processing sequence example 1-1, descriptions of the (R)AN 10 and the AMF 30 are omitted in FIG. 14.

An outline of the encryption method in processing sequence example 1-2 is as follows.

- As processing after successful authentication, the 3GPP NW generates a root key K used for deriving a common key and shares the root key K with the UE 20 side.
- Based on K, various keys for encryption are derived on each of the NW side and the UE 20 side according to existing 3GPP Key hierarchy generation processing.

NW authentication by the UE 20 is realized by signing a message in the NW→UE direction with the private key of the NW and verifying the signature with the public key of the NW on the UE 20 side.

The preconditions in processing sequence example 1-2 are the same as those in processing sequence example 1-1.

In S301-1 of FIG. 14, the UE 20 requests, from the VDR 70, a public key associated with the identifier of the 3GPP NW. In S301-2, the VDR 70 responds to the UE 20 with the public key associated with the identifier of the 3GPP NW. That is, in S301-1 to S301-2, the UE 20 obtains, from the VDR 70, the corresponding public key using the identifier of the 3GPP NW as an input.

S301-1 to S301-2 are executed, for example, by preparing a communication means other than the 3GPP NW to be connected to. Alternatively, S301-1 to S301-2 may be realized by extending the UE 20 and the 3GPP NW so that this communication can be executed via the 3GPP NW even before connection to the 3GPP NW to be connected to.

As in processing sequence example 1-1, S301-1 to S301-2 may be omitted by pre-installing the public key of the NW in the UE 20 together with the NW connection function/application or the like.

In S302, NW connection processing using an attribute/qualification credential is started, triggered by, for example, a user's operation of an NW connection application or power-on of the UE 20.

In S303, the UE 20 transmits, to the authentication apparatus 60, an NW connection request message for requesting NW connection by an attribute/qualification credential, the NW connection request message including a user identifier (for example, a DID) and a user's attribute/qualification credential (for example, a VC). Information included in the NW connection request message is signed (for example, as a VP) by the UE 20 using the private key corresponding to the user identifier. Further, the information included in the NW connection request message is encrypted by the UE 20 using the public key of the 3GPP NW. The UE 20 may include, in the NW connection request message, the public key corresponding to the user identifier, and may transmit the NW connection request message including the public key.

In S304, the authentication function 60 decrypts the received message using its own private key (that of the 3GPP NW). The private key of the 3GPP NW may be set in advance in each NF, or may be stored in a DB such as a UDM/UDR (40) and obtained by each NF through an API or the like.

In S305, the authentication function 60 verifies the received attribute/qualification credential by executing authentication processing using the attribute/qualification credential. More specifically, in Primary Authentication processing (credential verification procedure) using the attribute/qualification credential, the authentication function 60 obtains, from the VDR 70, the public key corresponding to the identifier of the user and uses the public key. When the message of S303 includes the public key of the user, the authentication function 60 may extract the public key of the user from the message and use the extracted public key. Details of S305 are the same as those of the authentication processing described above.

After successful authentication, in S306, the authentication function 60 generates a root key K used for deriving a common key for encryption.

In S307, the authentication function 60 encrypts K with the public key of the user and transmits, to the UE 20, a message including the encrypted K. A signature generated with the private key of the NW is added by the authentication function 60 to information included in the message. "Information included in the message" may be the "message" itself.

In S308, the UE 20 decrypts information included in the received message with the private key of the user, extracts K, and verifies the signature with the public key of the NW. The signature verification is for allowing the UE 20 to detect impersonation of the NW, and corresponds to NW authentication by the UE 20.

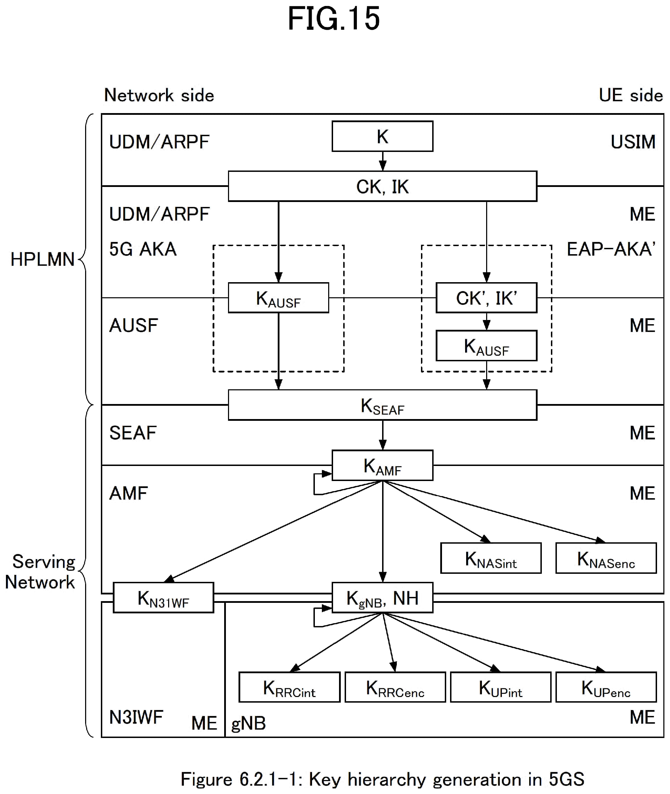

In S309, each of the UE 20 and the NW derives various keys for encryption based on K according to existing 3GPP Key hierarchy generation processing (FIG. 15). Thereafter, communication between the 3GPP NW and the UE 20 is performed after encryption with the derived keys.

### (Third Embodiment: Processing Sequence Example 2-1)

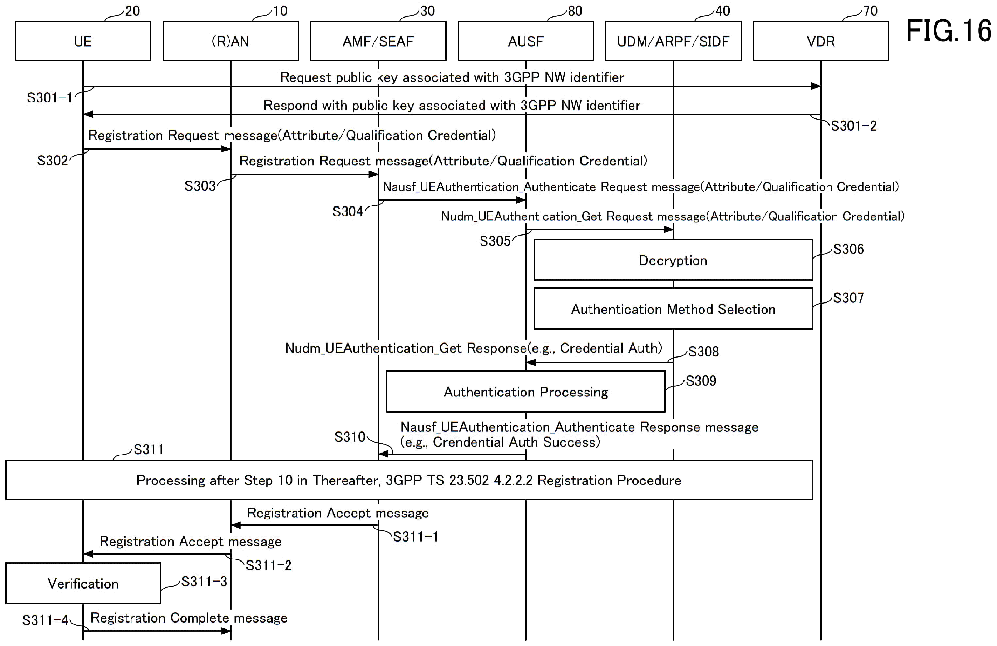

Next, with reference to FIG. 16, processing sequence example 2-1 in the third embodiment will be described. In processing sequence example 2-1, the AUSF 80 includes a function of performing authentication based on an attribute/qualification credential. By this function, authentication processing of S309 and the like described later are performed.

In the UDM 40, an authentication method selection function (used in S307) based on an attribute/qualification credential at the time of authentication method selection, and the following information used in the attribute/qualification credential method, are held.

- a NW identifier, and a public key and a private key associated with the identifier
- credential information available for NW connection (credential type, data format, information that should be included in the credential, and the like)

The sequence will be described with reference to FIG. 16.

In S301-1, the UE 20 requests, from the VDR 70, a public key associated with the identifier of the 3GPP NW. In S301-2, the VDR 70 responds to the UE 20 with the public key associated with the identifier of the 3GPP NW.

That is, in S301-1 to S301-2, the UE 20 obtains, from the VDR 70, the corresponding public key using the identifier of the 3GPP NW as an input.

S301-1 to S301-2 are executed, for example, by preparing a communication means other than the 3GPP NW to be connected to. Alternatively, S301-1 to S301-2 may be realized by extending the UE and the 3GPP NW so that this communication can be executed via the 3GPP NW even before connection to the 3GPP NW to be connected to. Further, S301-1 to S301-2 may be omitted by pre-installing the public key of the NW in the UE 20 together with the NW connection function/application or the like.

In S302, the UE 20 includes an attribute/qualification credential in a Registration Request message and transmits the Registration Request message including the attribute/qualification credential to the (R)AN 10. Information (attribute/qualification credential and the like) included in the Registration Request message is signed (for example, as a VP) by the UE 20 using the private key corresponding to the identifier of the user. Further, the information is encrypted by the UE 20 using the public key of the 3GPP NW.

In S303, the (R)AN 10 forwards, to the AMF/SEAF (30), the Registration Request message including the attribute/qualification credential encrypted with the public key of the 3GPP NW.

In S304, the AMF/SEAF (30) includes, in a Nausf_UEAuthentication_Authenticate Request message, the attribute/qualification credential encrypted with the public key of the 3GPP NW, and transmits the Nausf_UEAuthentication_Authenticate Request message including the attribute/qualification credential to the AUSF 80 as an authentication request.

In S305, the AUSF 80 includes, in a Nudm_UEAuthentication_Get Request message, the attribute/qualification credential encrypted with the public key of the 3GPP NW, and transmits the Nudm_UEAuthentication_Get Request message including the attribute/qualification credential to the UDM/ARPF/SIDF (40) as an authentication request.

In S306, the UDM/ARPF/SIDF (40) decrypts information (attribute/qualification credential and the like) included in the received message using its own private key (that of the 3GPP NW). It is assumed that the private key of the 3GPP NW is stored in the UDM/UDR (40). The private key of the 3GPP NW may be handled only in the UDM, may be shared with another node such as the AUSF 80 as necessary, or may be stored in storage or the like of each node.

In S307, the UDM/ARPF/SIDF (40) performs Authentication Method Selection.

Specifically, when the received message includes no SUPI or SUCI and includes an attribute/qualification credential, authentication using the attribute/qualification credential is selected as the authentication method. Further, when both a SUPI or SUCI and an attribute/qualification credential are included, the authentication method is selected based on a pre-registered authentication method selection policy or a user request.

In S308, the UDM/ARPF/SIDF (40) includes, in a Nudm_UEAuthentication_Get Response message, a character string (for example, Credential Auth) indicating that the attribute/qualification credential authentication method has been selected, and transmits the Nudm_UEAuthentication_Get Response message including the character string to the AUSF 80. The message includes the attribute/qualification credential decrypted by the UDM 40. The message may also include the encrypted attribute/qualification credential and the private key of the NW stored in the UDM 40. In this case, the AUSF 80 decrypts the attribute/qualification credential.

In S309, the AUSF 80 performs authentication processing using the attribute/qualification credential.

In S310, the AUSF 80 includes, in a Nausf_UEAuthentication_Authenticate Response message, a character string (for example, Crendential Auth Success) indicating that attribute/qualification credential authentication has succeeded, and transmits the Nausf_UEAuthentication_Authenticate Response message including the character string to the AMF/SEAF (30).

Thereafter, in S311, the processing of step 10 and subsequent steps of the Registration Procedure of 3GPP TS 23.502 4.2.2.2 is executed, and the NW Registration processing is completed. In the NW Registration processing, the API based on a SUPI/SUCI or the subscriber information registration processing based on a SUPI/SUCI is extended so as to be executable using a user identifier (DID or the like) included in the attribute/qualification credential.

As part of the processing in S311, the following processing is executed.

In S311-1, the AMF/SEAF (30) transmits a Registration Accept message. Information included in the Registration Accept message is signed by the AMF/SEAF (30) with the private key of the NW and encrypted with the public key of the user.

In S311-2, the (R)AN 10 forwards the Registration Accept message to the UE 20. Information included in the Registration Accept message is signed with the private key of the NW and encrypted with the public key of the user.

In S311-3, the UE 20 decrypts information included in the received Registration Accept message with the private key of the user and verifies the signature with the public key of the NW.

After confirming that the sender of the Registration Accept message is not an impersonating NW, the UE 20 encrypts information included in a Registration Complete message with the public key of the 3GPP NW, transmits the Registration Complete message including the encrypted information, and continues communication processing with the NW.

As in the above-described example, an attribute/qualification credential is also added to a Mobility Registration Update/Periodic Registration Update message.

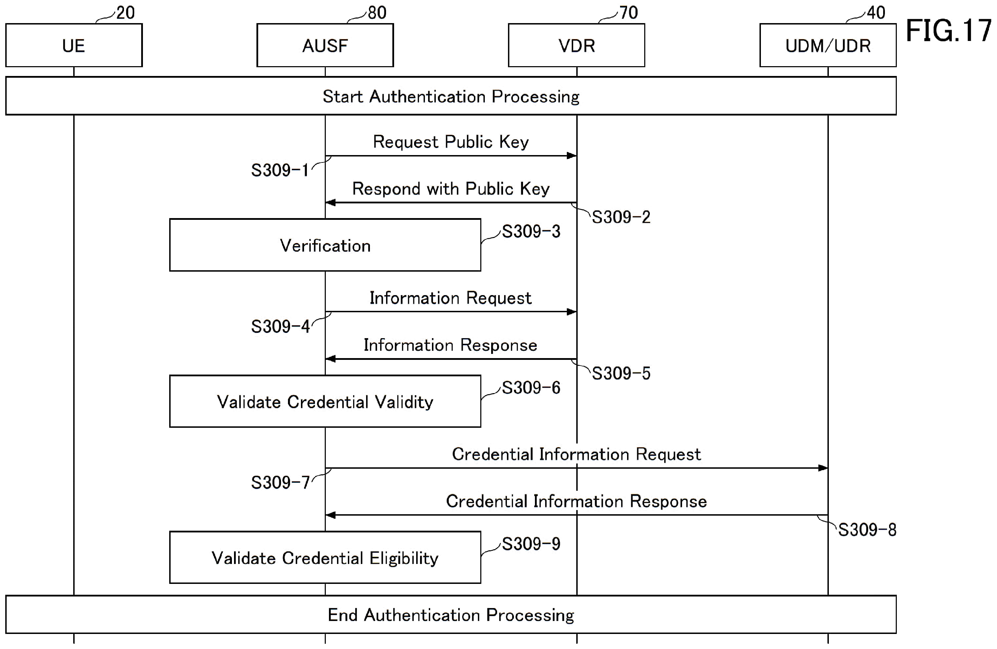

With reference to FIG. 17, details of S309 will be described. Here, as in the foregoing examples, verification of an attribute/qualification credential in W3C DID/VC/VP format is assumed as an example of verification processing logic. In the following sequence, communication between the AUSF and the VDR or the UDM is all performed by new C-Plane messages.

When authentication processing using an attribute/qualification credential is started, in S309-1, the AUSF 80 requests, from the VDR 70, a public key corresponding to the identifier of the credential issuer (Issuer) and a public key corresponding to the identifier of the user. In S309-2, the VDR 70 responds to the AUSF 80 with the public key.

In S309-3, the AUSF 80 verifies the validity of the signature of the credential issuer and the signature of the user, as well as the absence of message tampering.

Communication between the AUSF 80 within the 3GPP NW and the VDR 70 outside the 3GPP NW may be performed via a node (for example, the NEF or the SCEF) that mediates the communication.

More specifically, regarding S309-1 to S309-3, in S309-1 and S309-2, the AUSF 80 uses DID0 (the identifier of the credential issuer) and DID1 (the identifier of the user) included in the received VP/VC as inputs, and obtains (resolves), from the VDR 70, a DID Document (public key) corresponding to DID0 and a DID Document (public key) corresponding to DID1 by using any DID Method. In S309-3, the AUSF 80 verifies that the Holder signature of the VP and the Issuer signature of the VC are signatures by private keys associated with those public keys (that is, the validity of the signatures and the absence of message tampering).

When the message of S302 in FIG. 16 includes the public key of the user, S309-1 to S309-3 may be omitted.

In S309-4, the AUSF 80 requests, from the VDR 70, information regarding the format of the credential and status information (revocation status and the like). In S309-5, the VDR 70 responds with the format of the credential and the status information. In S309-6, the AUSF 80 verifies the validity of the credential.

More specifically, in S309-4 to S309-6, the AUSF 80 obtains, from the VDR 70, a VC schema, definition information, and the like, and verifies that the syntax and the like of the VC are correct. Further, the AUSF 80 obtains, from the VDR 70, validity information/revocation information of the VC, and verifies that the received VC is valid.

In S309-7, the AUSF 80 requests, from the UDM/UDR (40), credential information available for NW connection, and in S309-8, the UDM/UDR (40) responds with the credential information. In S309-9, the AUSF 80 performs credential eligibility verification. More specifically, the AUSF 80 verifies that conditions for a VC available for NW connection are satisfied (for example, that it is a My Number VC and that it includes necessary information such as name and address).

When the AUSF 80 determines that all of the above verification results are OK, the AUSF 80 determines that authentication has succeeded. S309-7 to S309-8 may be omitted by including the credential information in the message of S308 in FIG. 16 and transmitting the message.

### (Third Embodiment: Processing Sequence Example 2-2)

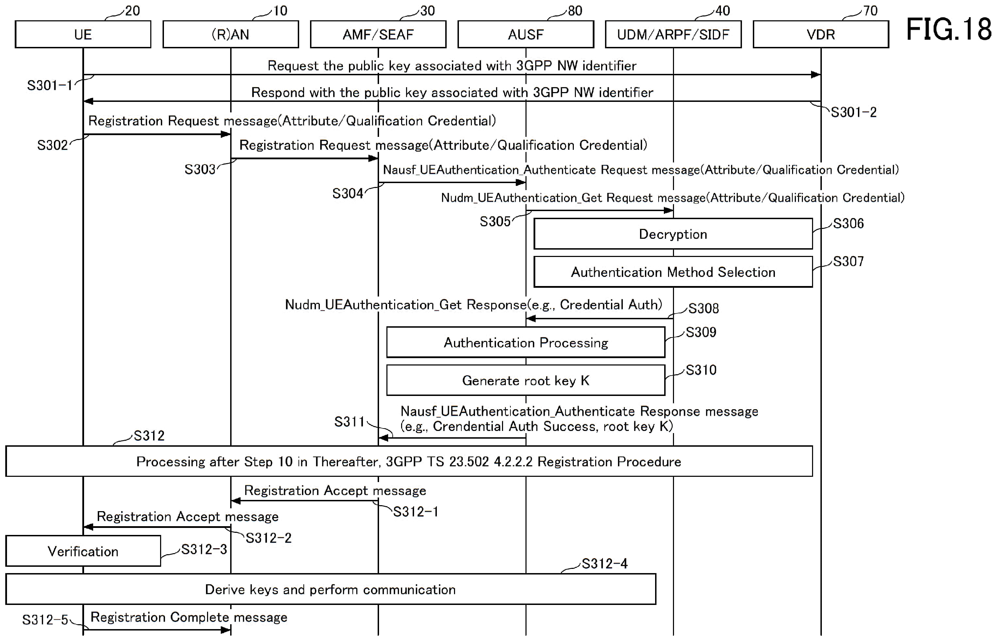

Next, with reference to FIG. 18, processing sequence example 2-2 in the third embodiment will be described. In processing sequence example 2-2 as well, the AUSF 80 includes a function of performing authentication based on an attribute/qualification credential. By this function, authentication processing of S309 and the like described later are performed.

In the UDM 40, an authentication method selection function (used in S307) based on an attribute/qualification credential at the time of authentication method selection, and the following information used in the attribute/qualification credential method, are held.

- a NW identifier, and a public key and a private key associated with the identifier
- credential information available for NW connection (credential type, data format, information that should be included in the credential, and the like)

The sequence will be described with reference to FIG. 18.

In S301-1, the UE 20 requests, from the VDR 70, a public key associated with the identifier of the 3GPP NW. In S301-2, the VDR 70 responds to the UE 20 with the public key associated with the identifier of the 3GPP NW.

That is, in S301-1 to S301-2, the UE 20 obtains, from the VDR 70, the corresponding public key using the identifier of the 3GPP NW as an input.

S301-1 to S301-2 are executed, for example, by preparing a communication means other than the 3GPP NW to be connected to. Alternatively, S301-1 to S301-2 may be realized by extending the UE and the 3GPP NW so that this communication can be executed via the 3GPP NW even before connection to the 3GPP NW to be connected to.

Further, S301-1 to S301-2 may be omitted by pre-installing the public key of the NW in the UE 20 together with the NW connection function/application or the like.

In S302, the UE 20 includes an attribute/qualification credential in a Registration Request message and transmits the Registration Request message including the attribute/qualification credential to the (R)AN 10. Information (attribute/qualification credential and the like) included in the Registration Request message is signed (for example, as a VP) by the UE 20 using the private key corresponding to the identifier of the user. Further, the information is encrypted by the UE 20 using the public key of the 3GPP NW.

In S303, the (R)AN 10 forwards, to the AMF/SEAF (30), the Registration Request message including the attribute/qualification credential encrypted with the public key of the 3GPP NW.

In S304, the AMF/SEAF (30) includes, in a Nausf_UEAuthentication_Authenticate Request message, the attribute/qualification credential encrypted with the public key of the 3GPP NW, and transmits the Nausf_UEAuthentication_Authenticate Request message including the attribute/qualification credential to the AUSF 80 as an authentication request.

In S305, the AUSF 80 includes, in a Nudm_UEAuthentication_Get Request message, the attribute/qualification credential encrypted with the public key of the 3GPP NW, and transmits the Nudm_UEAuthentication_Get Request message including the attribute/qualification credential to the UDM/ARPF/SIDF (40) as an authentication request.

In S306, the UDM/ARPF/SIDF (40) decrypts information (attribute/qualification credential and the like) included in the received message using its own private key (that of the 3GPP NW). It is assumed that the private key of the 3GPP NW is stored in the UDM/UDR (40). The private key of the 3GPP NW may be handled only in the UDM, may be shared with another node such as the AUSF 80 as necessary, or may be stored in storage or the like of each node.

In S307, the UDM/ARPF/SIDF (40) performs Authentication Method Selection.

Specifically, when the received message includes no SUPI or SUCI and includes an attribute/qualification credential, authentication using the attribute/qualification credential is selected as the authentication method. Further, when both a SUPI or SUCI and an attribute/qualification credential are included, the authentication method is selected based on a pre-registered authentication method selection policy or a user request.

In S308, the UDM/ARPF/SIDF (40) includes, in a Nudm_UEAuthentication_Get Response message, a character string (for example, Credential Auth) indicating that the attribute/qualification credential authentication method has been selected, and transmits the Nudm_UEAuthentication_Get Response message including the character string to the AUSF 80. The message includes the attribute/qualification credential decrypted by the UDM 40. The message may also include the encrypted attribute/qualification credential and the private key of the NW stored in the UDM 40. In this case, the AUSF 80 decrypts the attribute/qualification credential.

In S309, the AUSF 80 performs authentication processing using the attribute/qualification credential. Details of the authentication processing are the same as those of the authentication processing described above.

In S310, the AUSF 80 generates a root key K, which is a common key between the UE 20 and the NW.

In S311, the AUSF 80 includes, in a Nausf_UEAuthentication_Authenticate Response message, a character string (for example, Crendential Auth Success) indicating that attribute/qualification credential authentication has succeeded and the root key K, and transmits the Nausf_UEAuthentication_Authenticate Response message including the character string and the root key K to the AMF/SEAF (30).

Thereafter, in S312, the processing of step 10 and subsequent steps of the Registration Procedure of 3GPP TS 23.502 4.2.2.2 is executed, and the NW Registration processing is completed. In the NW Registration processing, the API based on a SUPI/SUCI or the subscriber information registration processing based on a SUPI/SUCI is extended so as to be executable using a user identifier (DID or the like) included in the attribute/qualification credential.

As part of the processing in S312, the following processing is executed.

In S312-1, the AMF/SEAF (30) includes the root key K in a Registration Accept message, and transmits the Registration Accept message including the root key K. Information included in the Registration Accept message is signed by the AMF/SEAF (30) with the private key of the NW and encrypted with the public key of the user. The message including the root key K and notified to the UE 20 is not limited to a Registration Accept message, and any message may be used.

In S312-2, the (R)AN 10 forwards the Registration Accept message to the UE 20. Information included in the Registration Accept message is signed with the private key of the NW and encrypted with the public key of the user.

In S313-3, the UE 20 decrypts information included in the received Registration Accept message with the private key of the user and verifies the signature with the public key of the NW. Here, the root key K is extracted.

In S312-4, based on K, various keys for encryption are derived on each of the NW side and the UE 20 in accordance with the existing 3GPP NAS Security Procedure, and subsequent communication is performed after encryption with those keys.

In S312-4, the UE 20 encrypts information included in a Registration Complete message with a key derived from K, transmits the Registration Complete message including the encrypted information, and continues communication processing with the NW.

Instead of the AUSF 80 generating the root key K, the AMF/SEAF (30) may generate the root key K. In this case, the AMF/SEAF (30) may include, in the message of S312-1, the root key K with a signature generated by the private key of the NW and transmit the message. The "root key K with a signature generated by the private key of the NW" is transmitted to the UE 20, and signature verification is performed by the UE 20.

As in the above-described example, an attribute/qualification credential is also added to a Mobility Registration Update/Periodic Registration Update message.

### (Effects of Third Embodiment)

According to the technique of the third embodiment, the terminal 20 can connect to the NW based on authentication that is based on an attribute/qualification credential.

Further, in the third embodiment, since the user identifier and the attribute/qualification credential are transmitted after encryption, security can be enhanced. In messages transmitted from the NW side to the UE 20, unauthorized acts such as impersonation by the NW side can be detected, and as a result, security can be enhanced.

### (Other Examples Common to the First to Third Embodiments)

Other examples common to the first to third embodiments will be described below. Matters related to a specific embodiment are indicated as such.

The NW connection function 21 may include, for example, a digital identity wallet responsible for managing a user identifier, an attribute/qualification credential, and a public key/private key associated with the identifier.

A storage location in the NW connection function 21 for the user identifier, the attribute/qualification credential, and the public key/private key associated with the identifier may be a normal storage area in the UE 20, an HSM (hardware security module) in the UE 20, or storage outside the UE 20 that is accessible from the UE 20.

The issuer of the attribute/qualification credential may be the 3GPP NW operator itself, in addition to a third party.

When both a SIM and an attribute/qualification credential are available in the UE 20, or when a plurality of attribute/qualification credentials are available for NW connection, it may be possible to select, based on user operation/setting, which information is to be included in a message and presented to the NW side. In the second embodiment, the request message for attributes/credentials from the NW side to the UE 20 may include conditions in a form that encompasses multiple attributes/credentials, allowing the user to select, based on user operation/settings, which information to include in the message and present to the NW side.

In existing 3GPP NWs, a SUPI or a SUCI is used to identify a UE in order to provide unified services to that UE, and in many cases, it is mandatory for the SUPI or SUCI to be included in messages exchanged between NFs and in API inputs of Services provided by NFs. In contrast, in the present embodiment, even in a situation where the UE 20 cannot provide a SUPI or a SUCI to the 3GPP NW, it is possible to identify/manage the UE 20 based on a user identifier (DID or the like), an identifier (such as the ID of the VC itself) capable of uniquely specifying the attribute/qualification credential, and the like.

Further, mechanisms in databases of nodes such as the AMF 30 and the UDM/UDR (40), in which information is managed using a SUPI or a SUCI as a key, can all be made compatible with management using, as a key, a user identifier (DID or the like) or an identifier capable of uniquely specifying an attribute/qualification credential.

### (Apparatus Configuration)

Next, functional configuration examples of the "authentication function 60, the AMF 30, the UDM 40, the VDR 70, the AUSF 80, and the like," and the terminal 20 (UE 20), which carry out the processing and operation described above, will be described. Hereinafter, network nodes such as the authentication function 60, the AMF 30, the UDM 40, the VDR 70, and the AUSF 80 are collectively referred to as a "network node 100."

### <Network Node 100>

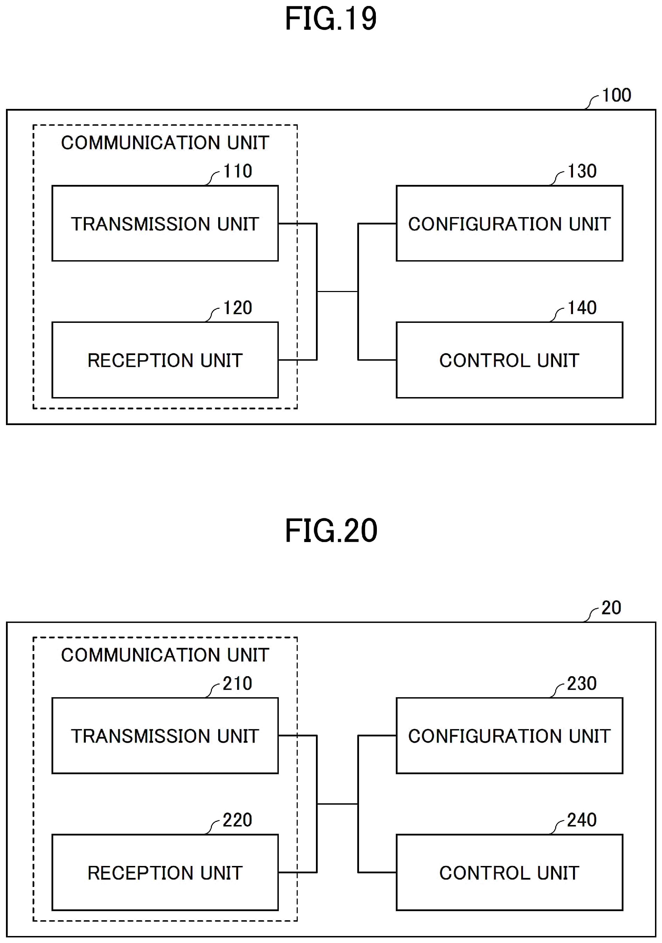

FIG. 19 is a diagram illustrating one example of a functional configuration of the network node 100.

As illustrated in FIG. 19, the network node 100 includes a transmission unit 110, a reception unit 120, a configuration unit 130, and a control unit 140. The functional configuration illustrated in FIG. 19 is merely one example. As long as the operation according to the embodiment of the present invention can be carried out, the functional division and the names of functional units may be arbitrary.

The transmission unit 110 includes a function of generating a signal to be transmitted to the terminal 20 or another network node and transmitting the signal by wire or wirelessly. The reception unit 120 includes a function of receiving various signals transmitted from the terminal 20 or another network node and obtaining, from the received signal, information of, for example, a higher layer. A communication unit including the transmission unit 110 and the reception unit 120 may be configured.

The configuration unit 130 stores, in a storage device, configuration information set in advance and various kinds of configuration information to be transmitted to the terminal 20, and reads them from the storage device as necessary. The control unit 140 controls the network node 100. A functional unit relating to signal transmission in the control unit 140 may be included in the transmission unit 110, and a functional unit relating to signal reception in the control unit 140 may be included in the reception unit 120. The transmission unit 110 and the reception unit 120 may also be referred to as a transmitter and a receiver, respectively.

### <Terminal 20>

FIG. 20 is a diagram illustrating one example of a functional configuration of the terminal 20. As illustrated in FIG. 20, the terminal 20 includes a transmission unit 210, a reception unit 220, a configuration unit 230, and a control unit 240. The functional configuration illustrated in FIG. 20 is merely one example. As long as the operation according to the embodiment of the present invention can be carried out, the functional division and the names of functional units may be arbitrary.

The transmission unit 210 generates a transmission signal from transmission data and wirelessly transmits the transmission signal. The reception unit 220 wirelessly receives various signals and obtains higher-layer signals from received physical-layer signals. The reception unit 220 also has a function of receiving an NR-PSS, an NR-SSS, an NR-PBCH, a DL/UL control signal, a reference signal, and the like transmitted from the network node 30. A communication unit including the transmission unit 210 and the reception unit 220 may be configured.

The configuration unit 230 stores, in a storage device, various kinds of configuration information received from the network node by the reception unit 220, and reads the information from the storage device as necessary. The configuration unit 230 also stores configuration information set in advance.

The control unit 240 controls the terminal 20. A functional unit relating to signal transmission in the control unit 240 may be included in the transmission unit 210, and a functional unit relating to signal reception in the control unit 240 may be included in the reception unit 220. The transmission unit 210 and the reception unit 220 may also be referred to as a transmitter and a receiver, respectively.

### (Hardware Configuration)

The block diagrams (FIGS. 19 and 20) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmission unit or the transmitter. As described above, the attainment method thereof is not particularly limited.

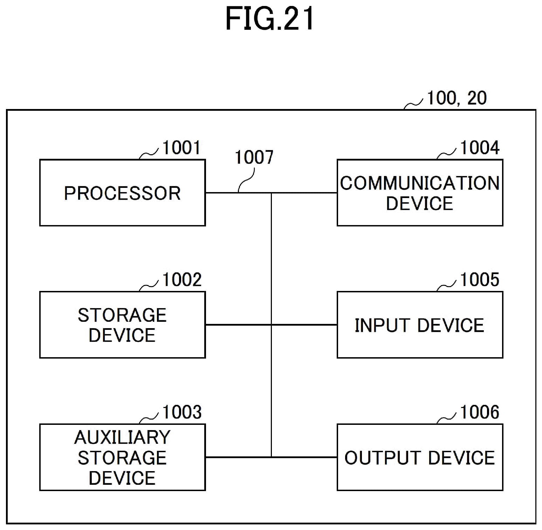

For example, the network node 100, and the terminal 20 and the like in one embodiment of this disclosure may function as a computer for performing the processing of a radio communication method of this disclosure. FIG. 21 is a diagram illustrating an example of a hardware configuration of the network node 100 and the terminal 20 and the like according to one embodiment of this disclosure. The network node 100 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the network node 100 and the terminal 20 and the like may be configured to include one or a plurality of apparatuses illustrated in the drawings, or may be configured not to include a part of the apparatuses.

Each function of the network node 100 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the network node 100 shown in Fig.19 may be attained by a control program that is stored in the storage device 1002 and is operated by the processor 1001. Also, for example, the control unit 240 of the terminal 20 shown in Fig.20 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and reception unit, a transmission path interface, and the like may be attained by the communication device 1004. In the transmitting and reception unit, the transmission unit and the reception unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the network node 100 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

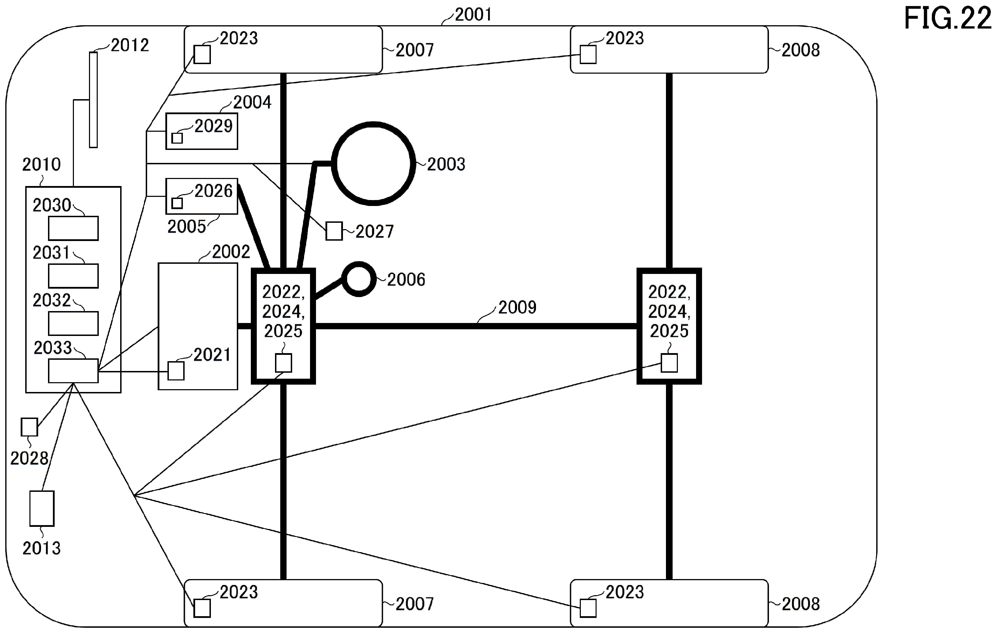

FIG. 22 shows a configuration example of a vehicle 2001. As shown in FIG. 22, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The aspect/embodiment described in the present disclosure may be applied to a communication apparatus mounted on the vehicle 2001, and may be applied to, for example, the communication module 2013. For example, the network nodes 100, or the terminal 20, may be included in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, etc.) that receives input from external sources and may also include an output device (for example, a display, a speaker, an LED lamp, a touch panel, etc.) that provides output to external destinations.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a terminal, a network node, or the like.

The communication module 2013 may transmit at least one of, signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

Further, when the communication module 2013 includes the network node 100 (or the terminal 20), the communication module 2013 can execute the operation of the network node 100 (or the terminal 20) described above.

The present specification discloses at least the configurations according to Supplementary Note 1 to Supplementary Note 3 below.

### <Supplementary Note 1>

### (Clause 1)

A terminal including:
a transmission unit configured to transmit, to a network, a connection request message including a credential storing personal data; and
a control unit configured to, after an authentication process using the credential has been performed in the network, execute a registration procedure to the network after the authentication process.

### (Clause 2)

The terminal according to Clause 1,
wherein the connection request message is a registration request message requesting registration to the network.

### (Clause 3)

A network node including:
a reception unit configured to receive, from a specific network node having received, from a terminal, a connection request message including a credential storing personal data, an authentication request message including the credential;
a control unit configured to execute an authentication process using the credential; and
a transmission unit configured to transmit an authentication result to the specific network node.

### (Clause 4)

The network node according to Clause 3,
wherein the transmission unit requests, to a management node that manages user data, registration of personal data included in the credential.

### (Clause 5)

The network node according to Clause 3,
wherein the network node is an AUSF.

### (Clause 6)

A communication method executed by a network node, the communication method including:
receiving, from a specific network node having received, from a terminal, a connection request message including a credential storing personal data, an authentication request message including the credential;
executing an authentication process using the credential; and
transmitting an authentication result to the specific network node.

According to any of Clauses 1 to 6, a technique is provided that enables a terminal to connect to a NW based on authentication that is based on an attribute/qualification credential. According to Clauses 2 and 5, by extending a message or node defined in the existing 3GPP standard, a technique can be realized that enables a terminal to connect to a NW based on authentication that is based on an attribute/qualification credential. According to Clause 4, in authentication based on an attribute/qualification credential, information for billing and the like can be registered in a management node.

### <Supplementary Note 2>

### (Clause 1)

A terminal including:
a transmission unit configured to transmit a connection request message to a network;
a reception unit configured to receive, from the network, a message requesting a credential storing personal data; and
a control unit configured to, after the credential has been transmitted by the transmission unit and an authentication process using the credential has been performed in the network, execute a registration procedure to the network after the authentication process.

### (Clause 2)

The terminal according to Clause 1,
wherein the connection request message is a registration request message requesting registration to the network.

### (Clause 3)

A network node including:
a reception unit configured to receive an authentication request message from a specific network node having received a connection request message from a terminal;
a transmission unit configured to transmit, to the terminal, a message requesting a credential storing personal data; and
a control unit configured to execute an authentication process using the credential transmitted from the terminal based on the message.

### (Clause 4)

The network node according to Clause 3,
wherein the message includes a condition of the credential to request from the terminal.

### (Clause 5)

The network node according to Clause 3,
wherein the network node is an AUSF.

### (Clause 6)

A communication method executed by a network node, the communication method including:
receiving an authentication request message from a specific network node having received a connection request message from a terminal;
transmitting, to the terminal, a message requesting a credential storing personal data; and
executing an authentication process using the credential transmitted from the terminal based on the message.

According to any of Clauses 1 to 6, a technique is provided that enables a terminal to connect to a NW based on authentication that is based on an attribute/qualification credential. According to Clauses 2 and 5, by extending a message or node defined in the existing 3GPP standard, a technique can be realized that enables a terminal to connect to a NW based on authentication that is based on an attribute/qualification credential. According to Clause 4, the NW can request, from the terminal, an attribute/qualification credential satisfying conditions desired by the NW.

### <Supplementary Note 3>

### (Clause 1)

A terminal including:
a transmission unit configured to transmit, to a network, a connection request message including a credential storing personal data; and
a control unit configured to, after an authentication process using the credential has been performed in the network, execute a registration procedure to the network after the authentication process,
wherein the transmission unit transmits the credential or the connection request message after encrypting it with a public key of the network.

### (Clause 2)

The terminal according to Clause 1, further including a reception unit configured to receive, from the network, a message including information signed with a private key of the network after the authentication process using the credential has been performed in the network,
wherein the control unit verifies the signature by using the public key.

### (Clause 3)

The terminal according to Clause 2,
wherein the reception unit receives, from the network, a message encrypted with a public key of the terminal.

### (Clause 4)

The terminal according to Clause 1, further including a reception unit configured to receive a root key from the network,
wherein the control unit generates, using the root key, a common key between the network and the terminal.

### (Clause 5)

A network node including:
a reception unit configured to receive, from a specific network node having received, from a terminal, a connection request message including a credential storing personal data, an authentication request message including the credential;
a control unit configured to execute an authentication process using the decrypted credential; and
a transmission unit configured to transmit an authentication result to the specific network node,
wherein the connection request message received by the specific network node or the credential included in the connection request message is encrypted with a public key of the network.

### (Clause 6)

The network node according to Clause 5,
wherein the transmission unit transmits, to the terminal, a root key used for generating a common key between the network and the terminal.

According to any of Clauses 1 to 6, a technique is provided that enables a terminal to connect to a NW based on authentication that is based on an attribute/qualification credential. According to Clause 2, impersonation on the network side can be detected. According to Clause 3, security can be enhanced. According to Clauses 4 and 6, encrypted communication using a common key can be realized.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the network node 100 and the terminal 20 have been described by using a functional block diagram, but such an apparatus may be attained by hardware, software, or a combination thereof. Each of software that is operated by a processor of the network node 100 and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G),xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated, or specified on the basis thereof. In addition, a combination of a plurality of systems (for example, a combination of at least 5G and one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Specific operations that are described in the present specification as being performed by the base station 10 ((R)AN 10) may in some cases be performed by an upper node thereof. In a network including one or more network nodes having the base station 10, it is clear that various operations performed for communication with the terminal 20 may be performed by at least one of the base station 10 and another network node other than the base station 10 (for example, an MME or an S-GW, but not limited thereto). Although the above has exemplified a case where the number of other network nodes other than the base station 10 is one, the other network node may be a combination of a plurality of other network nodes (for example, an MME and an S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station (terminal 20) may be referred to as a transmitting apparatus, a receiving apparatus, a communication apparatus, and the like. Note that, at least one of the base station and the mobile station may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

Further, in the present disclosure, the base station may be read as the user terminal. For example, the various aspects/embodiments of the present disclosure may be applied to a configuration in which communication between a base station and a user terminal is replaced with communication between a plurality of terminals 20 (which may also be referred to as D2D (Device-to-Device), V2X (Vehicle-to-Everything), or the like). In this case, the terminal 20 may have the functions of the base station 10 described above. Further, terms such as "uplink" and "downlink" may be read as terms corresponding to terminal-to-terminal communication (for example, "side"). For example, an uplink channel, a downlink channel, and the like may be read as a side channel.

Similarly, in the present disclosure, the user terminal may be read as the base station. In this case, the base station may have the functions of the user terminal described above.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 Base station ((R)AN)
20 Terminal (UE)
21 NW connection function
30 AMF
40 UDM
41 NW information DB
42 Credential information DB
43 Policy DB
60 Authentication function
70 VDR
71 User information DB
72 Issuer information DB
73 Definition information DB
74 Management information DB
80 AUSF
100 Network node
110 Transmission unit
120 Reception unit
130 Configuration unit
140 Control unit
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a transmission unit configured to transmit a connection request message to a network;
a reception unit configured to receive, from the network, a message requesting a credential storing personal data; and
a control unit configured to, after the credential has been transmitted by the transmission unit and an authentication process using the credential has been performed in the network, execute a registration procedure to the network after the authentication process.

2. The terminal as claimed in claim 1,
wherein the connection request message is a registration request message requesting registration to the network.

3. A network node comprising:
a reception unit configured to receive an authentication request message from a specific network node having received a connection request message from a terminal;
a transmission unit configured to transmit, to the terminal, a message requesting a credential storing personal data; and
a control unit configured to execute an authentication process using the credential transmitted from the terminal based on the message.

4. The network node as claimed in claim 3,
wherein the message includes a condition of the credential to request from the terminal.

5. The network node as claimed in claim 3,
wherein the network node is an AUSF.

6. A communication method executed by a network node, the communication method including:
receiving an authentication request message from a specific network node having received a connection request message from a terminal;
transmitting, to the terminal, a message requesting a credential storing personal data; and
executing an authentication process using the credential transmitted from the terminal based on the message.
